# EUROPEAN PATENT SPECIFICATION

(11) **EP 4 147 024 B1**
(45) Date of publication and mention of the grant of the patent: **26.08.2026**
(21) Application number: 21725453.1
(22) Date of filing: 06.05.2021
(51) Int. Cl.: G01N 1/30

(54) **COMPOSITION COMPRISING RACEMIC HEMATOXYLIN, ITS USE AND METHOD OF STAINING A BIOLOGICAL SAMPLE.**
ZUSAMMENSETZUNG, DIE RACEMISCHES HÄMATOXYLIN ENTHÄLT, DEREN VERWENDUNG UND VERFAHREN ZUM FÄRBEN EINER BIOLOGISCHEN PROBE.
COMPOSITION CONTENANT DE L'HÉMATOXYLINE RACÉMIQUE, SON UTILISATION ET PROCÉDÉ DE COLORATION D'UN ÉCHANTILLON BIOLOGIQUE.

(30) Priority: 08.05.2020 US 202063022294 P
(43) Date of publication of application: 15.03.2023
(73) Proprietor: Ventana Medical Systems, Inc., Tucson, Arizona 85755 (US); F. Hoffmann-La Roche AG, 4070 Basel (CH); Roche Diagnostics GmbH, 68305 Mannheim (DE)
(72) Inventor: DURRANT, Edward E., Tucson, Arizona 85755 (US); HEINDL, Dieter, 82377 Penzberg (DE); HUBER, Florian, 82377 Penzberg (DE); KLEIN, Eric, Tucson, Arizona 85755 (US); KOSMEDER, Jerome W. II, Tucson, Arizona 85755 (US); VOSS, Edgar, 82377 Penzberg (DE)
(74) Representative: Simmons & Simmons LLP (Munich)
(86) International application number: PCT/EP2021/061930
(87) International publication number: WO 2021/224361

(56) References cited:
- WO-A1-2008/112993
- WO-A1-2012/096842
- WO-A1-2015/165850
- WO-A1-2016/096943
- WO-A1-2018/206521
- WO-A2-2009/148885
- US-A1- 2019 376 988
- DANN OTTO ET AL: "Chromane, XVII: Die Synthese von ( )-Hämatoxylin", CHEMISCHE BERICHTE, vol. 98, 1 May 1965 (1965-05-01), pages 1498 - 1504, XP055830709

## Description

### BACKGROUND OF THE DISCLOSURE

Hematoxylin has been described as the most important and most used dye in histology, histochemistry, histopathology, and cytology. Several histochemical staining protocols, including Hematoxylin and Eosin (H&E) staining and Papanicolaou (PAP) staining, rely on the dye hematoxylin to stain cytological and tissue samples. In particular, hematoxylin staining of cell nuclei is used by pathologists to detect the presence of malignant and/or metastatic cells in a tumor biopsy sample.

Hematoxylin is a naturally-occurring compound found in the red heartwood of trees of the genus *Haematoxylum.* Hematoxylin itself is colorless in aqueous solution and is not the active ingredient that stains tissue components. Rather, an oxidation product of hematoxylin, hematein, becomes the active staining component of a hematoxylin solution, particularly upon complexation with a mordant. For example, to produce a functional dye, hematoxylin is oxidized to hematein and subsequently bound to one of several metal ions, including aluminum (Al⁺³), iron (Fe⁺³) and chromium (Cr⁺³). Hematein is produced naturally through exposure to air and sunlight. The natural process is termed "ripening," and can take three or more months to provide a solution suitable for staining cells.

Hematoxylin staining can be accomplished either manually using an immersion (dip-and-dunk) technique or by using automated systems, such as the Symphony^{®} automated system provided by Ventana Medical Systems, Inc. The staining processes generally involve: (a) removing paraffin from a specimen affixed to a microscope slide and hydrating the specimen by soaking in water; (b) applying hematoxylin in a particular formulation to stain cell nuclei; (c) removing excess hematoxylin by rinsing with water; (d) contacting the slide with a concentrated solution having a pH-value above 5.0 to turn the hematoxylin blue (e.g. a bluing solution); and (e) removing the bluing solution by rinsing with water.

### BRIEF SUMMARY OF THE DISCLOSURE

In general, the present invention provides hematoxylin formulations comprising racemic hematoxylin. In some embodiments, the racemic hematoxylin formulations are suitable for staining the nuclei of cells in a biological sample. In some embodiments, the racemic hematoxylin formulations are suitable for staining rough endoplasmic reticulum, ribosomes, collagen, myelin, elastic fibers, and acid mucins. In some embodiments, the racemic hematoxylin formulations are suitable as a counterstain in CISH (chromogenic *in situ* hybridization), or for visualizing the morphology around specific antigen-antibody complexes (chromogenic immunohistochemistry). The applicant has unexpectedly discovered that staining with racemic hematoxylin is functionally equivalent to staining with commercially available enantiopure hematoxylin.

A first aspect of the present invention is a hematoxylin formulation including racemic hematoxylin, a solvent, a chemical oxidant, a mordant, a stabilizer, and an antioxidant. The formulation of the present invention is defined in claim 1.

In some embodiments, the solvent comprises one or more of water, a lower alkanol, and a polyol. In some embodiments, the solvent comprises water and a polyol. In some embodiments, the polyol is selected from the group consisting of propylene glycol, poly (ethylene glycol), and poly (propylene glycol).

In some embodiments, between 1% and 50% of the racemic hematoxylin in the hematoxylin formulation is oxidized to hematein by the chemical oxidant. In some embodiments, the chemical oxidant includes one or more of sodium iodate, mercuric oxide, potassium permanganate, potassium periodate, and hydrogen peroxide. In some embodiments, the chemical oxidant includes sodium iodate. In some embodiments, a molar ratio of hematoxylin to oxidant in the composition ranges from between about 6:1 and about 1:1. In some embodiments, the mordant includes one or more of an aluminum mordant, an iron mordant, a bismuth mordant, a copper mordant, a molybdenum mordant, a vanadium mordant, and a zirconium mordant. In some embodiments, the mordant comprises aluminum sulfate.

In some embodiments, the stabilizer includes cyclodextrin or a cyclodextrin derivative. In some embodiments, the cyclodextrin or cyclodextrin derivative is one or more of β-cyclodextrin and a β-cyclodextrin derivative.

In some embodiments, the hematoxylin formulation further includes an acid. In some embodiments, no acid is added to the hematoxylin formulation.

Another aspect of the present invention is a method for staining a biological sample, comprising contacting the biological sample with a racemic hematoxylin formulation comprising the racemic hematoxylin, a solvent, an amount of a chemical oxidant sufficient to convert at least a portion of the racemic hematoxylin to hematein, a mordant, an antioxidant, and a stabilizer.

The method of the present invention is defined in claim 13.

In some embodiments, the stabilizer is selected from the group consisting of a polysaccharide, a cryptand, a cryptophane, a cavitand, a crown ether, a dendrimer, a nanotube, a calixarene, a valinomycin, and a nigericin.

In some embodiments, the method further includes contacting the sample with a counterstain. In some embodiments, the counterstain is selected from the group consisting of eosin Y, orange G, light green SF yellowish, Bismark Brown, and fast green FCF. In some embodiments, the contacting of the sample with the racemic hematoxylin formulation includes a progressive hematoxylin staining protocol. In some embodiments, the contacting the sample with the racemic hematoxylin formulation comprises a regressive hematoxylin staining protocol. In some embodiments, the method is automated. In some embodiments, the biological sample is supported on a substrate. In some embodiments, the substrate comprises a microscope slide.

In some embodiments, the stabilizer has a water solubility of greater than about 100 mg/mL at about 25 °C. In some embodiments, the antioxidant is selected from the group consisting of a hydroquinone, a n-alkyl gallate, a reducible sugar, a benzoate, a hydroxybenzoate, a sulfite, a metabisulfite, citric acid, tartaric acid, lactic acid, erythorbic acid ascorbic acid, uric acid, tannic acid, one or several chelators, choral hydrate, derivatives, and salts thereof.

### BRIEF DESCRIPTION OF THE FIGURES

For a general understanding of the features of the disclosure, reference is made to the drawings. In the drawings, like reference numerals have been used throughout to identify identical elements.
FIG. 1A illustrates an auto-scaled HPLC chromatogram of a solution including commercial hematoxylin, and further illustrates the peak results.
FIG. 1B illustrates enlarged views of the peak results of the HPLC chromatogram of FIG. 1A for each component of the solution.
FIG. 2A illustrates an auto-scaled HPLC chromatogram of a solution including racemic hematoxylin, and further illustrates the peak results.
FIG. 2B illustrates enlarged views of the peak results of the HPLC chromatogram of FIG. 2A for each component of the solution.
FIG. 3A illustrates a tissue sample stained with commercial hematoxylin.
FIG. 3B illustrates a tissue sample stained with commercial hematoxylin.
FIG. 4A illustrates a tissue sample stained with racemic hematoxylin.
FIG. 4B illustrates a tissue sample stained with racemic hematoxylin.
FIGS. 5A and 5B compare commercial hematoxylin at 20x to synthetic hematoxylin at 20x on kidney glomerulis tissue (trichrome hematoxylin). Staining with synthetic hematoxylin provides comparatively greater nuclear detail and overlap crisper images.
FIGS. 6A and 6B compare commercial hematoxylin at 20x to synthetic hematoxylin at 20x on colon tissue (mucicarmine iron hematoxylin). Staining with synthetic hematoxylin provides comparatively greater nuclear detail and overlap crisper images.
FIGS. 7A and 7B compare commercial hematoxylin at 20x to synthetic hematoxylin at 20x on colon tissue (hematoxylin II). Staining with synthetic hematoxylin provides comparatively greater nuclear detail and overlap crisper images.
FIGS. 8A and 8B compare commercial hematoxylin at 20x to synthetic hematoxylin at 20x on kidney glomerulis tissue (hematoxylin II). Staining with synthetic hematoxylin provides comparatively greater nuclear detail and overlap crisper images.

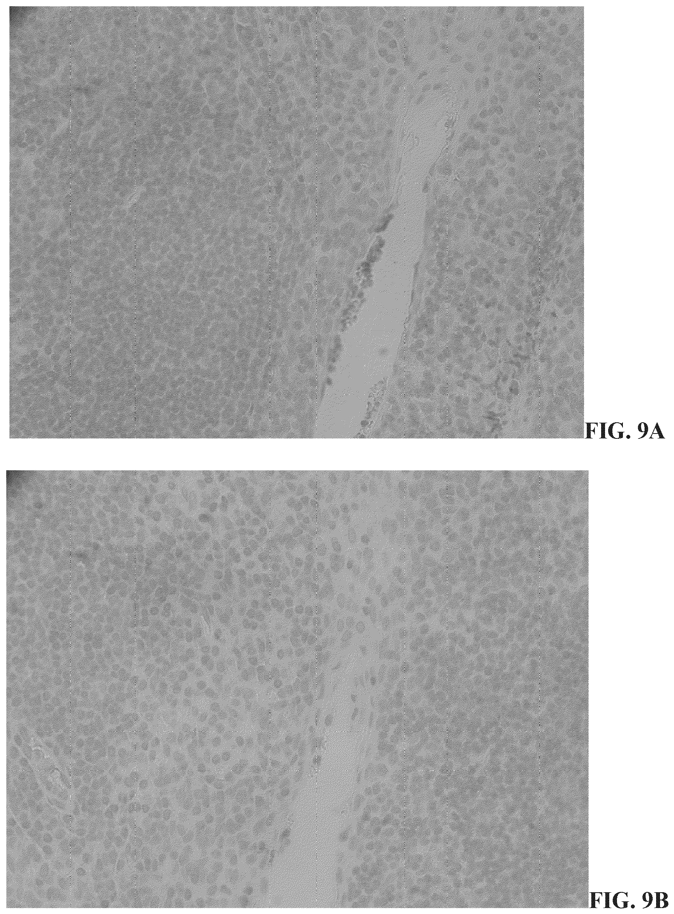

FIGS. 9A and 9B compare commercial hematoxylin at 20x to synthetic hematoxylin at 20x on tonsil tissue (hematoxylin II). Staining with synthetic hematoxylin provides comparatively greater nuclear detail and overlap crisper images.
FIGS. 10A and 10B compare commercial hematoxylin at 20x to synthetic hematoxylin at 20x on kidney glomerulis tissue (hematoxylin and eosin). Staining with synthetic hematoxylin provides comparatively greater nuclear detail and overlap crisper images.
FIGS. 11A and 11B compare commercial hematoxylin at 20x to synthetic hematoxylin at 20x on muscle blood vessel tissue (hematoxylin and eosin). Staining with synthetic hematoxylin provides comparatively greater nuclear detail and overlap crisper images.
FIGS. 12A and 12B compare commercial hematoxylin at 20x to synthetic hematoxylin at 20x on colon tissue (hematoxylin and eosin). Staining with synthetic hematoxylin provides comparatively greater nuclear detail and overlap crisper images.
FIGS. 13A and 13B compare commercial hematoxylin at 20x to synthetic hematoxylin at 20x on sebaceous gland hair follicle tissue (hematoxylin and eosin). Staining with synthetic hematoxylin provides comparatively greater nuclear detail and overlap crisper images.
FIGS. 14A and 14B compare commercial hematoxylin at 20x to synthetic hematoxylin at 20x on skin tissue (hematoxylin and eosin). Staining with synthetic hematoxylin provides comparatively greater nuclear detail and overlap crisper images.
FIGS. 15A and 15B compare commercial hematoxylin at 20x to synthetic hematoxylin at 20x on tonsil tissue (hematoxylin and eosin). Staining with synthetic hematoxylin provides comparatively greater nuclear detail and overlap crisper images.

### DETAILED DESCRIPTION

It should also be understood that, unless clearly indicated to the contrary, in any methods claimed herein that include more than one step or act, the order of the steps or acts of the method is not necessarily limited to the order in which the steps or acts of the method are recited.

As used herein, the singular terms "a," "an," and "the" include plural referents unless context clearly indicates otherwise. Similarly, the word "or" is intended to include "and" unless the context clearly indicates otherwise. The term "includes" is defined inclusively, such that "includes A or B" means including A, B, or A and B.

As used herein in the specification and in the claims, "or" should be understood to have the same meaning as "and/or" as defined above. For example, when separating items in a list, "or" or "and/or" shall be interpreted as being inclusive, e.g., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (e.g. "one or the other but not both") when preceded by terms of exclusivity, such as "either," "one of," "only one of" or "exactly one of." "Consisting essentially of," when used in the claims, shall have its ordinary meaning as used in the field of patent law.

The terms "comprising," "including," "having," and the like are used interchangeably and have the same meaning. Similarly, "comprises," "includes," "has," and the like are used interchangeably and have the same meaning. Specifically, each of the terms is defined consistent with the common United States patent law definition of "comprising" and is therefore interpreted to be an open term meaning "at least the following," and is also interpreted not to exclude additional features, limitations, aspects, etc. Thus, for example, "a device having components a, b, and c" means that the device includes at least components a, b, and c. Similarly, the phrase: "a method involving steps a, b, and c" means that the method includes at least steps a, b, and c. Moreover, while the steps and processes may be outlined herein in a particular order, the skilled artisan will recognize that the ordering steps and processes may vary.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

The term "antioxidant" refers to an atom or molecule that has a greater redox potential than a second atom or molecule, such that the antioxidant is preferentially oxidized instead of the second atom or molecule. For example, an antioxidant can have a greater oxidation potential than hematein, and thus help prevent oxidation of hematein to oxyhematein. Furthermore, an antioxidant also can function as a reducing agent, for example, a reducing agent that converts oxyhematein back to hematein. Antioxidants can be present in the disclosed formulations at concentrations ranging from about 1 mM to about 1 M, for example, from about 5 mM to about 500 mM, such as from about 50 mM to about 150 mM.

The term "aqueous solvent" refers to a composition having water as the major component and that is a liquid at room temperature. Mixtures of water and one or more lower alkanols or polyols that have about 50% or greater water content by volume are examples of aqueous solvents.

The term "biological sample" refers to any sample that is obtained from or otherwise derived from a biological entity such as an animal, for example, a sample obtained from a human or a veterinary animal such as a dog, cat, horse, or cow. Examples of biological samples include cytology samples, tissue samples and biological fluids. Non-limiting particular examples of biological samples include blood, urine, pre-ejaculate, nipple aspirates, semen, milk, sputum, mucus, pleural fluid, pelvic fluid, sinovial fluid, ascites fluid, body cavity washes, eye brushings, skin scrapings, a buccal swab, a vaginal swab, a pap smear, a rectal swab, an aspirate, a needle biopsy, a section of tissue obtained for example by surgery or autopsy, plasma, serum, spinal fluid, lymph fluid, sweat, tears, saliva, tumors, organs, and samples obtained from *in vitro* cell or tissue cultures. Typically, the sample will be a biopsy sample that has been fixed, processed to remove water, and embedded in paraffin or another suitable waxy substance for cutting into tissue sections. Biological samples can be mounted on substrates such as microscope slides for treatment and/or examination.

The term "mordant" refers to an ionic metal species with which a dye (such as hematein) can form a complex (such as a cationic complex) that serves to bind the dye (such as hematein) to particular cellular components such as nuclear DNA, myelin, elastic and collagen fibers, muscle striations, and mitochondria. Examples of mordants include aluminum (for example, in the form of an alum such as aluminum sulfate, aluminum potassium sulfate, or aluminum ammonium sulfate), iron, tungsten, zirconium, bismuth, molybdenum (phosphomolybdic acid or molybdic acid), and vanadium (vanadate).

The term "oxidant" refers to an atom or molecule having a greater redox potential than a second molecule, for example, a greater redox potential than hematoxylin such that it will react with and oxidize hematoxylin to hematein. Oxidants include naturally occurring molecular oxygen in the atmosphere that diffuses to and oxidizes hematoxylin and a "chemical oxidant" that is actively combined with hematoxylin (typically in solution) to convert at least a portion of the hematoxylin to hematein. Examples of useful chemical oxidants include one or more of an iodate salt (such as sodium iodate and potassium iodate), mercuric oxide, a permanganate salt (such as potassium permanganate), a periodate salt (such as sodium periodate and potassium periodate), and a peroxide (such as hydrogen peroxide). In particular embodiments, the chemical oxidant comprises sodium iodate.

The term "stabilizer" refers to an organic or inorganic molecule, complex, or material having an inner cavity portion or groove portion, and more particularly, to a molecule having an inner cavity portion or groove portion that can accommodate at least a portion of a hematein or other dye molecule.

### OVERVIEW

The present invention generally relates to hematoxylin formulations comprising racemic hematoxylin. In some embodiments, the racemic hematoxylin formulations are suitable for staining the nuclei of cells in a biological sample. Chirality is intrinsically present in the structures of polynucleotides like DNA and RNA, both at the molecular and supramolecular scale, which have been found to constitute the major target for hematoxylin-based anionic staining.[1,2] Their asymmetric D-ribose and D-2-deoxyribose units contain several stereogenic centers and sites with chiral environment suitable for hydrogen-bonding, electrostatic interactions, or coordinative binding of chemical agents.[12e] Furthermore, their helicity imposes another level of chirality on their tertiary structure, as it can be observed for example in B-DNA.

Chirality adopts a crucial role in the functionalities of DNA and RNA, because it guides their interactions with other chiral and achiral chemical agents, such as enzymes or even small molecules like dyes. [1,12e] Thus, the interactions between a vast number of drugs, dyes, as well as organometallic complexes and different DNA sequences and conformations have been subject of numerous studies. [2,3,4,5] It could be demonstrated that enantioselectivity of DNA binding is a decisive parameter in processes like staining with chiral dyes [2,5,6] or treatment of disease with enantiopure drugs [4] and can govern even the occurrence of undesired side effects such as toxicity and mutagenicity. It is well known that the enantiomers of natural products bind and react differently with DNA.

In this context the enantiomers of duocarmycin A, a natural product isolated from Streptomyces species that is alkylating DNA with high potency, represent a striking example. Boger and others have shown that (+)-duocarmycin A binds more selectively and has a 110-fold better efficiency in alkylating DNA than (-)-duocarmycin A. [9] Daunorubicin, another prominent natural product and highly active anticancer drug, intercalates into DNA with its daunomycinone aglycone unit and binds to the minor groove of B-DNA using its D-daunosamine residue. [10] Recent studies could determine that (+)-daunorubicin has a 21-fold increased binding affinity for certain sequences like poly[(dGdC)]2 in B-DNA, when being compared to its (-)-enantiomer .[11] In addition, a wide variety of monomeric and linked polyamides have been used to elucidate the influence of chirality on binding ability to polynucleotidic structures. [12] For this group of molecules, the binding affinity to B-DNA of the R-enantiomer is, in general, strongly enhanced.

Chiral recognition of DNA by enantiopure dyes has been studied most intensively for helicenes and other substituted, planar polycyclic hydrocarbons like pyrene and anthracene derivatives. [3,6] Accordingly, the P-enantiomer of helicene, modified by a protonated amino group, displays discrimination in binding between B- and Z-DNA. [5] A set of chiral cationic [4] helicenes was proven to have differences in binding affinities toward dsDNA factoring between 1.2 up to 2.3. [3] Due to the general importance of DNA-metal interactions, also chiral inorganic and organometallic complexes have been investigated heavily for their binding properties toward DNA-like structures. For example, certain Pt-complexes of 1,2-diamino-cyclohexane exhibit significant less toxicity and are even more efficient anticancer drugs using the R,R-form rather than its S,S-isomer. [7] In analogy, enantioselectivity in binding of numerous other chiral metal complexes, bearing iron, rhodium, ruthenium, and osmium at their centers, has been found and used as a tool for probing different DNA conformations .[8] Hemalum itself, as a prime example for hematoxylin-based staining formulations, is the organometallic complex of the Lewis acid Al3+ and hematein, the latter still owning one stereogenic center and thus rendering hemalum chiral in all off its different, pH-dependent compositions and ligand spheres. [1]

Although recent studies of J. A. Kiernan suggest that the red hemalum cation is just electrostatically attracted to the phosphate anion of DNA, so that the red cation is rather precipitated in situ as a blue compound when a stained preparation is blued at pH-values above 5.5, the nature of the hemalum-DNA interactions before and after bluing remains unresolved in detail. [2] Considering the above mentioned chemical principles and scientific findings, the skilled chemist would rather assume that using either pure enantiomer of hematoxylin in histological staining would yield different intensities in coloring, due to distinct binding affinities to DNA. Based on the foregoing, employing racemic hematoxylin in histology over the pure, natural enantiomer should either result in less or more strong staining, depending on which isomer forms the more DNA-affine Al3+-complex. As histological analysis in tissue diagnostics still is mostly a matter of subjective, visual judgment by the experimenter, any staining properties different from formulations made of pure (+)-hematoxylin would challenge the individual operating-experience of a histologist and the correctness of the outcome of his report. Only largely identical behavior of (+)- and (-)-hematoxylin towards DNA would render their racemat valuable for use in hematoxylin-based tissue diagnostics.

### RACEMIC HEMATOXYLIN FORMULATIONS

The present invention generally relates to hematoxylin formulations comprising racemic hematoxylin (hereinafter "racemic hematoxylin formulations"). The racemic hematoxylin formulations of the invention include racemic hematoxylin, stabilizers, solvents, antioxidants, oxidants, and mordants.

Additional components suitable for use within any of the racemic hematoxylin formulations of the present disclosure are set forth by Avwioro et al. "Histochemical Uses Of Hematoxylin - A Review," JPCS Vol (1), April-June 2011, and Bryan D. Llewellyn, "Hematoxylin Formulae," http://stainsfile.info, October 2013.

### Racemic Hematoxylin

Hematoxylin has the structure set forth below. Racemic hematoxylin (rac-hematoxylin) comprises a mixture of (+)-hematoxylin and (-)-hematoxylin.

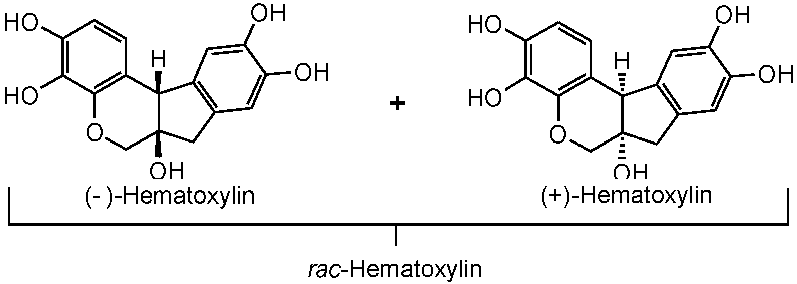

In some embodiments, a ratio of (+)-hematoxylin to (-)-hematoxylin ranges from between about 1:10 to about 10:1. In other embodiments, a ratio of (+)-hematoxylin to (-)-hematoxylin ranges from between about 1:5 to about 5:1. In yet other embodiments, a ratio of (+)-hematoxylin to (-)-hematoxylin ranges from between about 1:4 to about 4:1. In further embodiments, a ratio of (+)-hematoxylin to (-)-hematoxylin ranges from between about 1:3 to about 3:1. In yet further embodiments, a ratio of (+)-hematoxylin to (-)-hematoxylin ranges from between about 1:2.5 to about 2.5:1. In even further embodiments, a ratio of (+)-hematoxylin to (-)-hematoxylin ranges from between about 1:2 to about 2:1.

In some embodiments, racemic hematoxylin comprises between about 40% to about 60 wt-% of (+)-hematoxylin. In other embodiments, racemic hematoxylin comprises between about 45 wt-% to about 55 wt-% (+)-hematoxylin. In yet other embodiments, racemic hematoxylin comprises between about 48 wt-% to about 52 wt-% (+)-hematoxylin. In further embodiments, racemic hematoxylin comprises about 50 wt-% (+)-hematoxylin.

In some embodiments, racemic hematoxylin may be derived according to the procedure set forth in Example 2 herein. In other embodiments, racemic hematoxylin may be synthesized according to the procedures set forth by Dann O, Hofmann H (1965) Chromane XVII. Die Synthese von (±)-Hämatoxylin. Chem. Ber. 98: 1498 - 1504, [German].

### Stabilizers

Suitable stabilizers include polysaccharides such as amyloses, cyclodextrins, and other cyclic or helical compounds containing a plurality of aldose rings, for example, compounds formed through 1,4- and 1,6-bonding of monosaccharides (such as glucose, fructose, and galactose) and disaccharides (such as saccharose, maltose, and lactose). Other stabilizers include cryptands, cryptophanes, cavitands, crown ethers, dendrimers, nanotubes, calixarenes, valinomycins, and nigericins.

In some embodiments, stabilizers can include cyclodextrin derivatives, amylose derivatives, cryptand derivatives, cryptophane derivatives, cavitand derivatives, crown ether derivatives, dendrimer derivatives, nanotube derivatives, calixarene derivatives, valinomycin derivatives, and nigericin derivatives modified with one or more substituents. For example, stabilizers include amylose derivatives and cyclodextrin derivatives, wherein one or more of the hydroxyl groups or the hydrogen atoms of the hydroxyl groups of their constituent aldose rings are replaced with substituents. Examples of substituents include acyl groups (such as acetyl groups), alkyl groups, aryl groups, tosyl groups, mesyl groups, amino groups (including primary, secondary, tertiary, and quaternary amino groups), halogen groups (-F, -Cl, -Br, and -I), nitro groups, phosphorous-containing groups (such as phosphate and alkylphosphate groups), sulfur-containing groups (such as sulfate and sulfate ester groups), bridging groups, (that, for example, connect two or more hydroxyl positions on a cyclodextrin ring or connect two or more stabilizers), aldehyde groups, ketone groups, oxime groups, carboxylic acid groups and their derivatives, carbonate and carbamate groups, silicon-containing groups, boron-containing groups, tin-containing groups, and hydroxyalkyl groups (such as hydroxyethyl groups and hydroxypropyl groups).

Particular examples of cyclodextrins include α-cyclodextrin, β-cyclodextrin, γ-cyclodextrin, and δ-cyclodextrin, and derivatives of each of these classes of cyclodextrins. Particular examples of cyclodextrin derivatives, include hydroxypropylated α-cyclodextrin, hydroxypropylated β-cyclodextrin, hydroxypropylated γ-cyclodextrin, hydroxyethylated α-cyclodextrin, hydroxyethylated β-cyclodextrin, hydroxyethylated γ-cyclodextrin, hydroxyisopropylated α-cyclodextrin, hydroxyisopropylated β-cyclodextrin, hydroxyisopropylated γ-cyclodextrin, carboxymethylated α-cyclodextrin, carboxymethylated β-cyclodextrin, carboxymethylated γ-cyclodextrin, carboxyethylated α-cyclodextrin, carboxyethylated β-cyclodextrin, carboxyethylated γ-cyclodextrin, octyl succinated-α-cyclodextrin, octyl succinated-β-cyclodextrin, octyl succinated-γ-cyclodextrin, acetylated-α-cyclodextrin, acetylated-β-cyclodextrin, acetylated-γ-cyclodextrin, sulfated-α-cyclodextrin, sulfated-β-cyclodextrin, and sulfated-γ-cyclodextrin. Other particular examples of cyclodextrins derivatives include the following β-cyclodextrin derivatives: 2,3-dimethyl-6-aminomethyl-α-cyclodextrin, 6-azido-α-cyclodextrin, 6-bromo-β-cyclodextrin, 6A,6B-dibromo-β-cyclodextrin, 6A,6B-diiodo-β-cyclodextrin, 6-*O-*maltosyl-β-cyclodextrin, 6-iodo-α-cyclodextrin, 6-tosyl-β-cyclodextrin, peracetyl-maltosyl-β-cyclodextrin, 6-*t*-butyldimethylsilyl-β-cyclodextrin, 2,3-diacetyl-6-butyldimethylsilyl-β-cyclodextrin, 2,6-dibutyl-3-acetyl-β-cyclodextrin, 2,6-dibutyl-β-cyclodextrin, 2,6-*t*-butyl-dimethylsilyl-β-cyclodextrin, and 2,6-di-*O*-methyl-3-allyl-β-cyclodextrin. A variety of cyclodextrins and cyclodextrin derivatives can be obtained commercially, for example, from CTD, Inc. (High Springs, Fla.), or they can be synthesized according to procedures outlined in the scientific literature, for example, in "Synthesis of Chemically Modified Cyclodextrins," Croft and Bartsch, Tetrahedron, 39: 1417 - 1474, 1983.

In some embodiments, the stabilizer is one or more of a cyclodextrin or a cyclodextrin derivative. In other embodiments, the stabilizer is one or more of a β-cyclodextrin and a β-cyclodextrin derivative. In yet other embodiments, a stabilizer can be α-amylose, β-amylose, or gamma-amylose.

In some embodiments, stabilizers can be included in any racemic hematoxylin formulation at concentrations ranging from between about 1 mM to about 1 M, from between about 5 mM to about 500 mM, or from between about 5 mM to about 25 mM.

In yet other embodiments, a stabilizer can be a cyclodextrin or cyclodextrin derivative, and more particularly, a stabilizer can be a cyclodextrin or cyclodextrin derivative exhibiting water solubility at about 25°C of greater than about 5 mg/mL, such as greater than about 20 mg/mL, greater than about 100 mg/mL, or even greater than about 500 mg/mL.

### Solvents

Various solvents can be utilized in the racemic hematoxylin formulations of the present disclosure. In some embodiments, the solvent comprises one or more of water, a lower alkanol such as ethanol, and a polyol. In other embodiments, the solvent comprises an aqueous solvent wherein the aqueous solvent comprises water and a polyol.

Suitable examples of polyols include glycerol, ethylene glycol, propylene glycol, poly (ethylene glycol), and poly (propylene glycol). In some embodiments, aqueous solvent formulations comprise between about 5% to about 45% by volume of one or more of ethylene glycol and propylene glycol. In other embodiments, aqueous solvent formulations comprise between about 10% to about 40% by volume of one or more of ethylene glycol and propylene glycol. In yet other embodiments, aqueous solvent formulations comprise between about 15% to about 30% by volume of one or more of ethylene glycol and propylene glycol.

### Antioxidants

Examples of antioxidants suitable for use in any racemic hematoxylin formulation include hydroquinones, gallic acid, reducible sugars such as sorbitol and mannitol, benzoates and hydroxybenzoates, sulfites and metabisulfites, certain acids such as citric acid, tartaric acid, lactic acid, erythorbic acid ascorbic acid, uric acid, tannic acid, and salts of such acids (such as Mg²⁺, NH₄⁺, Na⁺, K⁺ and Ca²⁺ salts), chelators such as EDTA that remove metals that function as oxidants, and choral hydrate. In other embodiments, the water-soluble antioxidant includes one or more of hydroquinone and *n*-propyl gallate.

### Oxidants

Suitable chemical oxidants include naturally occurring molecular oxygen in the atmosphere that diffuses to and oxidizes racemic hematoxylin and a "chemical oxidant" that is actively combined with racemic hematoxylin (typically in solution) to convert at least a portion of the racemic hematoxylin to hematein. Half-oxidized hematoxylin solutions are solutions in which the oxidant is included in an amount which oxidizes approximately one half of the available racemic hematoxylin, as described by Gill, Acta Cytologica, 18(4):300 -11 (1974). Examples of useful chemical oxidants include one or more of an iodate salt (such as sodium iodate and potassium iodate), mercuric oxide, a permanganate salt (such as potassium permanganate), a periodate salt (such as sodium periodate and potassium periodate), and a peroxide (such as hydrogen peroxide). In particular embodiments, the chemical oxidant comprises sodium iodate.

The oxidant may be present in an amount sufficient to completely (such as substantially quantitatively) oxidize the racemic hematoxylin to hematein, or sufficient only to partially oxidize the racemic hematoxylin to hematein. In particular embodiments, more than half of the racemic hematoxylin is oxidized to hematein by the chemical oxidant, and in others, less than half of the racemic hematoxylin is oxidized to hematein by the chemical oxidant. For example, between 1% and 50% of the racemic hematoxylin can be oxidized to hematein by the chemical oxidant, but more typically, between about 10% and about 30% of the racemic hematoxylin is oxidized to hematein by the chemical oxidant. In particular examples, the molar ratio of racemic hematoxylin to oxidant used in the formulation is between 6:1 and 1:1. It should be understood that although the chemical oxidant is considered part of the formulation, it is converted to its reduction products upon reaction with the racemic hematoxylin. Those reduction products will remain in the formulation.

### Mordants

Suitable mordants for use in any racemic hematoxylin formulation include an aluminum mordant, an iron mordant, a bismuth mordant, a copper mordant, a molybdenum mordant, a vanadium mordant, and a zirconium mordant. In some embodiments, the mordant comprises an alum. In other embodiments, the mordant comprises aluminum sulfate. In some embodiments, the mordant can be present in the formulation at a concentration greater than the concentration of the hematein in the formulation (determinable by refractometry, thin-layer chromatography, or spectroscopy), or it can be present in the formulation at a concentration less than the concentration of the hematein in the formulation. Alternatively, in some embodiments, the molar ratio of racemic hematoxylin to mordant in the formulation ranges from between about 2:1 to about 1:100. In other embodiments, the molar ratio of racemic hematoxylin to mordant in the formulation ranges from between about 2:1 and about 1:50. In yet other embodiments, the molar ratio of racemic hematoxylin to mordant in the formulation ranges from between about 1:5 and about 1:20.

### Acids

In some embodiments, the racemic hematoxylin formulation may further include an acid and/or a buffer. Any acid may be utilized in the racemic hematoxylin formulations. Non-limiting examples of suitable acids include acetic acid, hydroiodic acid, hydrobromic acid, hydrochloric acid, nitric acid, hydrofluoric acid, nitrous acid, and formic acid.

### Examples of Racemic Hematoxylin Formulations

In some embodiments, the racemic hematoxylin in the racemic hematoxylin formulation has a molar concentration of between about 0.01 M and about 0.05 M. In other embodiments, the racemic hematoxylin in the racemic hematoxylin formulation has a molar concentration of between about 0.02 M and about 0.04 M. In yet other embodiments, the racemic hematoxylin in the racemic hematoxylin formulation has a molar concentration of about 0.03 M.

In some embodiments, a racemic hematoxylin formulation comprises a mixture of water and ethylene glycol as the solvent, sodium iodate as the oxidant, aluminum sulfate as the mordant, and β-cyclodextrin or a derivative thereof as the stabilizer. One or more water soluble antioxidants such as hydroquinone and *n-*propyl gallate may also be included in such particular embodiments. In other embodiments, the mixture of water and ethylene glycol comprises from about 10% to about 40% by volume ethylene glycol and from about 60% to about 90% by volume water. In some embodiments, a racemic hematoxylin formulation comprises a mixture of water, glycol ethers, and racemic hematoxylin.

### Methods of Preparing Racemic Hematoxylin Formulations

The present disclosure is also directed to methods of preparing racemic hematoxylin formulations, such as for histochemical staining of a biological sample. In some embodiments, the method includes forming a hematein solution, adding a mordant to the hematein solution to form a staining solution, and adding either or both of a stabilizer and an antioxidant to the staining solution to form the racemic hematoxylin formulation. In some embodiments, the forming of the hematein solution includes dissolving racemic hematoxylin in a solvent and adding an amount of a chemical oxidant sufficient to convert at least a portion of the racemic hematoxylin to hematein. In some embodiments, the solvent used to dissolve the racemic hematoxylin includes an aqueous composition such as compositions including water and a polyol. Non-limited examples of suitable polyols, as set forth herein, include glycerol, ethylene glycol and propylene glycol. Further methods of forming hematoxylin compositions are described in U.S. Publication No. 2017/0284908.

### Systems for Hematoxylin Staining

The racemic hematoxylin formulations described herein may be applied manually or introduced to a biological sample or applied using a dip-and-dunk technique. In other embodiments, the racemic hematoxylin formulations are applied or dispensed to a biological sample, such as by an automated staining apparatus. The skilled artisan will appreciate that the dispensing of any racemic hematoxylin formulations refers to the application of that racemic hematoxylin formulations to a biological sample or a substrate (e.g. a slide).

The method and formulations disclosed herein may be adapted for use with existing automated processing systems. For example, Ventana Medical Systems, Inc. is the assignee of a number of United States patents disclosing systems and methods for performing automated analyses, including U.S. Pat. Nos. 5,650,327, 5,654,200, 6,296,809, 6,352,861, 6,827,901 and 6,943,029, and U.S. published application Nos. 20030211630 and 20040052685. These systems may be adapted to be compatible with the present invention. Briefly, the automated slide processing system that are described in the aforementioned applications are high-volume slide processing systems that shuttle trays holding a plurality of slides in substantially horizontal positions (to minimize cross-contamination) between workstations that perform various slide processing operations on the slides. Fresh reagents can be applied to each slide during processing, and cross-contamination of slides with reagents can be substantially eliminated, because the slides are treated separately in spaced-apart fashion in the tray. In one configuration, the system includes a radiant heater, a combined deparaffinizer/stainer/solvent exchanger workstation, a convection oven and a coverslipper. A tray of slides bearing paraffin-embedded tissue samples can be heated under the radiant heater of the system to spread the paraffin in the samples for easier removal and also to adhere the samples to the slides. The tray can then be transported to the multifunctional de-paraffinizer/stainer/solvent exchanger workstation, where slides can be de-paraffinized, stained, and solvent exchanged. A tray of stained slides that is ready for coverslipping can then be shuttled to the coverslipper of the system, where coverslips are added to the slides. Once the slides are coverslipped, the tray can then be transported to the convection oven to cure the coverslips on the stained slides. The high volume stainer just described is commercially available from Ventana Medical Systems, Inc, Tucson, Ariz.

The staining systems described herein are not part of the present invention.

Examples of other commercially available specimen processing systems through which the solutions and formulations described herein may be applied include the VENTANA SYMPHONY (individual slide stainer) and the VENTANA HE 600 (individual slide stainer) series, as-well as the Dako CoverStainer (batch stainer) from Agilent Technologies, the Leica ST4020 Small Linear Stainer (batch stainer), Leica ST5020 Multistainer (batch stainer), and the Leica ST5010 Autostainer XL series (batch stainer) H&E stainers from Leica Biosystems Nussloch GmbH.

In some embodiments, while the staining systems described above may be configured to perform any histological staining process, an exemplary hematoxylin and eosin staining protocol comprises a baking step to adhere the samples to the slides, a de-paraffinization step to remove paraffin from paraffin-embedded samples, a hematoxylin staining step (that can utilize the disclosed hematoxylin formulations), a bluing step that raises the pH-value and turns the hematoxylin blue to provide better contrast with the eosin added downstream, an eosin staining step, a differentiation step that is used to remove excess eosin and turn the eosin various shades of red to pink, a dehydration step to remove water from the sample using absolute ethanol, a step in which the slides are exposed to an elevated temperature and air flow to remove the hydrocarbon, a coverslipping step in which D-limonene is dispensed to the sample, and a curing step.

In other embodiments, while the staining systems described above may be configured to perform any histological staining process, an exemplary hematoxylin and eosin staining protocol comprises a baking step to adhere the samples to the slides, a de-paraffinization step to remove paraffin from paraffin-embedded samples, a hematoxylin staining step (that can utilize the disclosed hematoxylin formulations), a bluing step that raises the pH-value and turns the hematoxylin blue to provide better contrast with the eosin added downstream, an eosin staining step, a differentiation step that is used to remove excess eosin and turn the eosin various shades of red to pink, a dehydration step to remove water from the sample using glycol ether (e.g. dipropylene glycol propyl ether) a step in which the slides are exposed to an elevated temperature and air flow to remove the hydrocarbon, a coverslipping step in which D-limonene is dispensed to the sample, and a curing step.

In some embodiments, and automated staining system includes one or more reservoirs, containers, and/or dispensers including a racemic hematoxylin formulation. In other embodiments, an automated staining system comprises a separate reservoir or containers containing separate pH-reduced hematoxylin formulation and readjustment solution. In some embodiments, the systems further comprise a dispensing system that delivers the racemic hematoxylin formulations (following readjustment of the pH-reduced racemic hematoxylin formulation) and any other solutions to the biological sample, e.g. a biological sample mounted on a slide. In some embodiments, the pH-reduced racemic hematoxylin formulations and/or other solutions (e.g. readjustment solutions) are combined prior to application to the biological sample. In some embodiments, a container of a pH-reduced racemic hematoxylin formulation and a container of another solution (e.g. a readjustment solution) are pressurized and fluidically connected to a mixing receptacle. The mixing receptacle can be any container capable of holding or transporting the mixed solution such as a rigid or flexible tube. In some embodiments, the mixing receptacle is a tube that is fluidically connected to a dispenser. In some embodiments, the pH-reduced racemic hematoxylin formulation and readjustment solution are fluidically connected to a T-fitting *via* tubing. The output from the T fitting is in turn fluidically connected to the dispenser. In these embodiments, the pH-reduced racemic hematoxylin formulation and readjustment solution are fed into the T fitting and mixing of the solutions occurs in the tube leading out of the T fitting. In some embodiments, the pH-reduced racemic hematoxylin formulation and readjustment solution are separately dispensed onto the biologically sample. In these embodiments, the solutions can be allowed to mix by diffusion on the sample or mechanically mixed, for example, by agitation with a pipette.

In some embodiments, the automated specimen processing apparatus may include a carousel for holding a plurality of substrates, e.g. microscope slides, wherein each substrate includes a biological sample to be stained. In some embodiments, the automatic staining equipment can also include a device for rotating the carousel at predetermined speeds and a mechanism for directing and controlling application of reagents, including the solutions and formulations described herein, onto the substrates and samples during rotation of the carousel. In some embodiments, once the slides are loaded into the instrument, test protocols will dictate which fluids are dispensed onto the substrates at specific times. At the appropriate time, in some embodiments, a dispenser rack will rotate to align a correct fluid over a substrate and the instrument will dispense a predetermined amount of a fluids onto the substrate. In some embodiments, the instrument will allow the fluid to remain in contact with the biological sample for a predetermined amount of time.

In some embodiments, the system is an automated slide processing system that includes a slide tray holding a plurality of slides in a substantially horizontal position (such as in two rows where the slides are held at an angle between about 0.2 degrees and about 1.2 degrees from horizontal) and one or more workstations (for example, arranged in a vertical stack) that receive the slide tray and perform one or more slide processing operations on slides in the slide tray. In some embodiments, the workstation can perform a slide processing operation on one or more individual slides in a slide tray, for example, at least two or four slides in a slide tray, or it can simultaneously perform a slide processing operation on all of the slides in a slide tray. In some embodiments, the one or more workstations dispense a reagent to slides in the slide tray without a substantial amount of the reagent that contacts a first slide contacting a second slide, thereby minimizing cross-contamination between slides. Such workstations can include one or more directional nozzles that dispense the reagent onto the slides, for example, the one or more directional nozzles can include a pair of directional nozzles that dispense the reagent in opposite directions across a surface of a slide. In more particular embodiments, the one or more directional nozzles can further include a directional nozzle that dispenses the reagent towards a bottom surface of a slide. In other particular embodiments, the one or more workstations can simultaneously dispense a reagent (for example, the same reagent) to at least two slides held in a slide tray within a given workstation, or the one or more workstations can simultaneously dispense a reagent (such as the same reagent) to all of the slides held in the slide tray within a given workstation. Additional system components and tray configurations (as well as control systems) are described in United States Patent Nos. 8,663,991, 7,468,161, and 9,528,918.

### Counterstains

In some embodiments, the systems and methods further comprise staining of biological samples with additional stains, such as counterstains. In some embodiments, contacting the sample with a counterstain comprises contacting the sample with one or more of eosin Y (CAS Number 15086-94-9), orange G (CAS Number 1936-15-8), light green SF yellowish (CAS Number 5141-20-8), Bismark Brown (CAS Number: 8005-77-4), fast green FCF (CAS Number 2353-45-9), OG-6 (including Orange G), EA25 (including light green SF, Bismarck brown, and eosin Y), EA36 (including light green SF, Bismarck brown, and eosin Y), EA50 (including light green SF, Bismarck brown, and eosin Y), and EA65 (including light green SF, Bismarck brown, and eosin Y). The formulas and methods of making such counterstains can be found, for example, in the StainsFile (an internet resource for histotechnologists maintained by Bryan Llewellyn); Kiernan, "Histological and Histochemical methods: Theory and Practice," 3rd Ed. Butterworth Heinemann, Oxford, UK; and in Horobin and Kiernan, "Conn's biological stains: a handbook of dyes, stains and fluorochromes for us in biology and medicine," 10th ed., Oxford: BIOS, ISBN 1859960995, 2002. In other embodiments, contacting the sample with the hematoxylin formulation comprises a progressive hematoxylin staining protocol. In other embodiments, contacting the sample with the hematoxylin formulation comprises a regressive hematoxylin staining protocol. The method can be automated and can be performed on a biological sample that is supported on a substrate such as a microscope slide. In particular embodiments, the method is used to stain a tissue section, or a cytology sample mounted on a microscope slide. In particular embodiments further including a counterstaining step, the method can be a hematoxylin and eosin staining method or a PAP staining method, and more particularly an automated hematoxylin and eosin or PAP staining method.

Other histological stains useful in conjunction with the staining procedures of the present invention include dyes such as acridine dyes, anthraquinone dyes, arylmethane dyes, azo dyes, diazonium dyes, nitro dyes, phthalocyanine dyes, quinine imine dyes, tetrazolium dyes, thiazole dyes, and xanthene dyes. Examples of dyes useful for histological staining include acetyl yellow, acid black 1, acid blue 22, acid blue 93, acid fuchsin, acid green, acid green 1, acid green 5, acid magenta, acid orange 10, acid red 4, acid red 26, acid red 29, acid red 44, acid red 51, acid red 66, acid red 73, acid red 87, acid red 91, acid red 92, acid red 94, acid red 101, acid red 103, acid roseine, acid rubin, acid violet 19, acid yellow 1, acid yellow 9, acid yellow 23, acid yellow 24, acid yellow 36, acid yellow 73, acid yellow S, acid yellow T, acridine orange, acriflavine, alcian blue, alcian yellow, alcohol soluble eosin, alizarin, alizarin blue, alizarin blue 2RC, alizarin carmine, alizarin cyanin BBS, alizarol cyanin R, alizarin red S, alizarin purpurin, aluminon, amido black 10B, amidonaphthol red, amidoschwarz, aniline blue WS, aniline purple, anthracene blue SWR, anthracene blue SWX, auramine 0, azo-eosin, azocarmine B, azocarmine G, azoeosin G, azoic diazo 5, azoic diazo 48, azophloxine, azovan blue, azure A, azure B, azure C, basic blue 8, basic blue 9, basic blue 12, basic blue 15, basic blue 17, basic blue 20, basic blue 26, basic brown 1, basic fuschsin, basic green 4, basic green 5, basic orange 14, basic red 2, basic red 5, basic red 9, basic violet 2, basic violet 4, basic violet 10, basic violet 14, basic yellow 1, basic yellow 2, Biebrich scarlet, Biebrich scarlet R, Bismarck brown Y, brazilein, brazilin, brilliant crocein, brilliant crystal scarlet 6R, calcium red, carmine, carminic acid carmoisine 6R, Celestine blue B, china blue, chlorantine fast red 5B, cochineal, coelestine blue, Chicago blue 4B, chrome violet CG, chromotrope 2R, chromoxane cyanin R, congo Corinth, Congo red, cotton blue cotton red, croceine scarlet, crocein scarlet 3B, crocein scarlet MOO, crocin, crystal ponceau 6R, crystal scarlet, crystal violet, dahlia, diamond green B, direct blue 14, direct blue 58, direct red, direct red 10, direct red 28, direct red 80, direct red 81, direct yellow 7, durazol blue 4R, durazol blue 8G, eosin B, eosin bluish, eosin, eosin Y, eosin yellowish, eosinol, Erie garnet B, eriochrome cyanin R, erythrosine B ethyl eosin, ethyl green, ethyl violet, Evan's blue, fast blue B, fast green FCF, fast red B, fast yellow, fast yellow extra, fast yellow G, fat black HB, fluorescein, food green 3, galleon, gallamine blue, gallocyanin, gentian violet, helio fast rubin BBL, helvetia blue, Hoffman's violet, hydrazine yellow, imperial red, ingrain blue 1, ingrain yellow 1, INT, Kermes, kermesic acid, kemechtrot, Lac, laccaic acid, Lauth's violet, light green, lissamine fast yellow, lissamine green SF, Luxol fast blue, magenta 0, magenta I, magenta II, magenta III, malachite green, Manchester brown, Martius yellow, mauve, mauveine, merbromin, mercurochrome, metanil yellow, methylene azure A, methylene azure B, methylene azure C, methylene blue, methylene green, methyl blue, methyl green, methyl violet, methyl biolet 2B, methyl violet 10B, milling yellow 3G, mordant blue 3, mordant blue 10, mordant blue 14, mordant blue 23, mordant blue 32, mordant blue 45, mordant red 3, mordant red 11, mordant violet 25, mordant violet 39, naphthalene blue black, naphthol blue black, naphthol green B, naphthol yellow S, natural black 1, natural red, natural red 3, natural red 4, natural red 8, natural red 16, natural red 24, natural red 25, natural red 28, natural yellow 6, NBT, neutral red, new fuchsin, Niagara blue 3B, night blue, Nile blue, Nile blue A, Nile blue sulfate, Nile red, nitro BT, nitro blue tetrazolium, nuclear fast red, oil red 0, orange G, orcein, pararosanilin, Perkin's violet, phloxine B, picric acid, Ponceau 2R, Ponceau 6R, Ponceau B, , Ponceau S, pontamine sky blue 5B, primula, primuline, purpurin, pyronin B, pyronin G, pyronin Y, rhodamine B, rosanilin, rose bengal, saffron, safranin 0, scarlet R, scarlet red, Scharlach R, shellac, sirius red F3B, sirius red 4B, sirius supra blue F3R, solochrome cyanin R, soluble blue, solvent black 3, solvent blue 38, solvent red 23, solvent red 24, solvent red 27, solvent red 45, solvent yellow 94, spirit soluble eosin, Sudan III, Sudan IV, Sudan black B, Sudan red BK, sulfur yellow S, Swiss blue, tartrazine, thioflavine S, thioflavine T, thionin, toluidine blue, toluoyline red, tropaeolin G, trypaflavine, trypan blue, uranin, Vicoria blue 4R, Victoria blue B, Victoria blue R, Victoria green B, water blue I, water soluble eosin, woodstain scarlet, and yellowish eosin, and combinations thereof. Formulas and methods of making and using histochemical dye solutions discussed in this paragraph (such as in "special stain" procedures in particular histological contexts, or as counterstains) can be found, for example, in the StainsFile (an internet resource for histotechnologists maintained by Bryan Llewellyn); Kiernan, "Histological and Histochemical methods: Theory and Practice," 3rd Ed. Butterworth Heinemann, Oxford, UK; and in Horobin and Kiernan, "Conn's biological stains: a handbook of dyes, stains and fluorochromes for us in biology and medicine," 10th ed., Oxford: BIOS, ISBN 1859960995, 2002.

### EXAMPLES

### Example 1 - Tissue Staining Using a Racemic Hematoxylin Formulation

### Introduction

Two individual lots of VENTANA HE 600 Hematoxylin Solution were prepared and evaluated by HPLC analysis and functional staining. One lot was prepared from commercially available hematoxylin; while the other lot was prepared from racemic hematoxylin (e.g. prepared according to the semi-synthesis described in Example 2, herein). Both solutions were assessed by functional testing (H&E staining) and HPLC analysis and both solutions were found to be essentially equivalent.

### Reagents

*(1) EDTA*/*Phenol red diluent solution*
   To a bottle, add 1 L of commercially available 0.02 M EDTA solution.
   Add 0.01 g of phenol red, sodium salt indicator dye.
   Mix until dye is dissolved.
*(2) 25 mM Ammonium formate mobile phase buffer solution (pH = 4, aqueous)*
   To a bottle, add ~1 L of deionized (DI) water.
   Add 1.0 mL of 99%wt formic acid.
   Add 1.3 mL of ~29% wt aqueous ammonia solution and swirl to mix.
*(3) Acetonitrile* (HPLC grade)
(4) *MS Detector diluent*
   To a 5 L bottle, add 500 mL of HPLC-grade acetonitrile.
   Bring the volume to 5 L with DI water.
   Add 1 mL of 99 wt% formic acid.
   Invert several times to mix.
*(5) Hematoxylin (commercial)*
*(6) Hematoxylin (racemic)*
*(7) Ethylene glycol*
*(8) Sodium iodate*
*(9) Aluminum sulfate hydrate*
*(10) Hydroquinone*
*(11) β-Cyclodextrin hydrate*

### Sample preparation

Two samples of VENTANA HE 600 Hematoxylin Solution were prepared according to the HE 600 Hematoxylin Development Formula method as follows:
To a container, add 65 mL of DI water.
Begin moderate stirring.
Add 28 g of ethylene glycol.
Add 0.61 g of hematoxylin.
Mix moderately for 30 to 120 minutes.
Add 0.065 g of sodium iodate.
Within 10 minutes of adding the sodium iodate, add 2.7 g of aluminum sulfate hydrate.
Mix moderately for 30 to 120 minutes.
Add 0.93 g of hydroquinone.
Add 1.1 g of β-cyclodextrin.
Bring to 100 mL with DI water.
Mix moderately for 30 to 120 minutes.
The pH-value of the final solution should be between 2.45 and 2.54.

### Analytical method

Each HE 600 Hematoxylin solution was analyzed by HPLC under the following conditions:
Sample preparation: 20 µL of sample diluted to 1 mL with EDTA/Phenol red diluent solution
Instrument: Waters Alliance e2695 Separations Module
Run Time: 30 minutes
Injection volume: 20 µL
Flowrate: 1 mL/minute
Column ID: Waters XBridge C18
Column Length: 150 mm
Column Diameter: 4.6 mm
Particle Size: 3.5 µm
Mobile Phase A: 25 mM ammonium formate buffer, pH = 4
Mobile Phase B: Acetonitrile
Column Temperature: 40°C
UV-Vis Detector: Waters 2998 Photodiode Array
MS Detector: Waters QDa Mass Detector

### Results

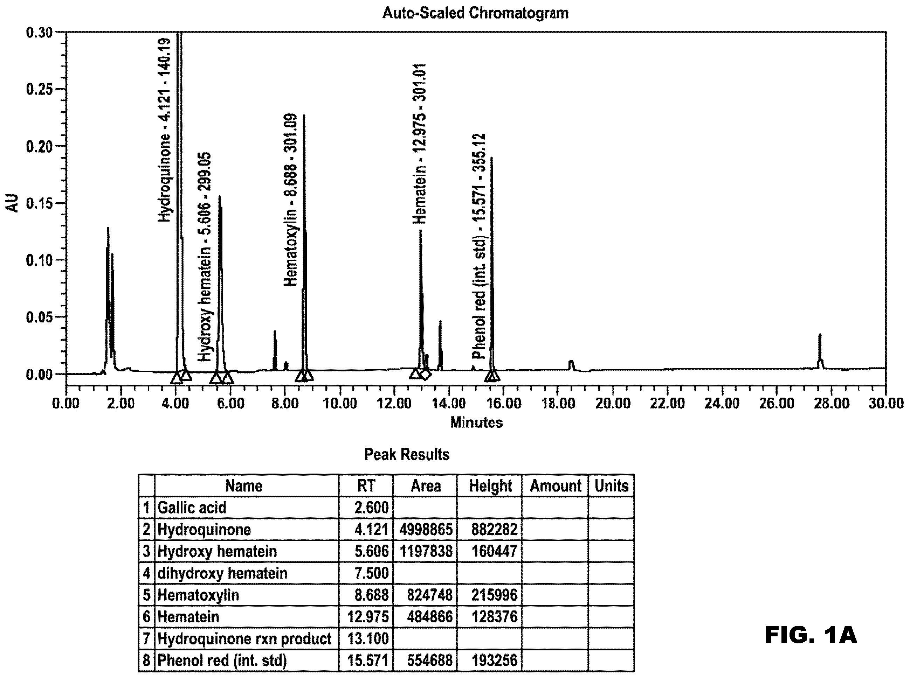

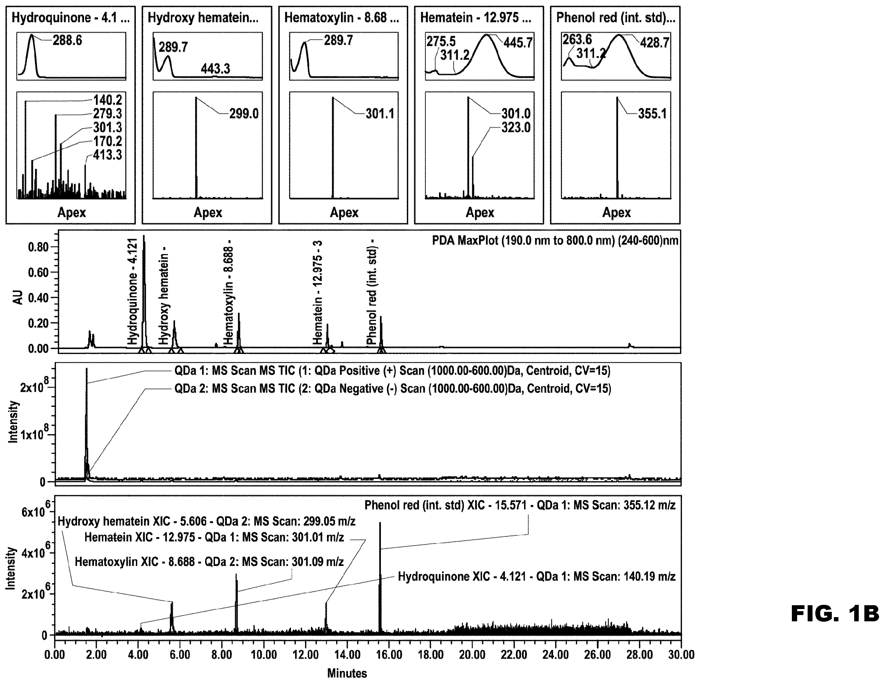

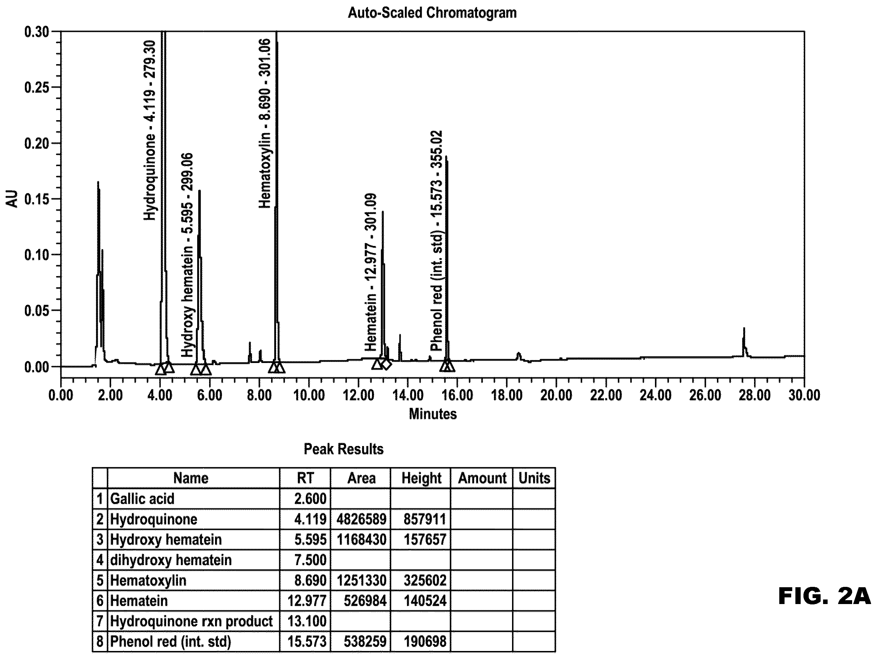

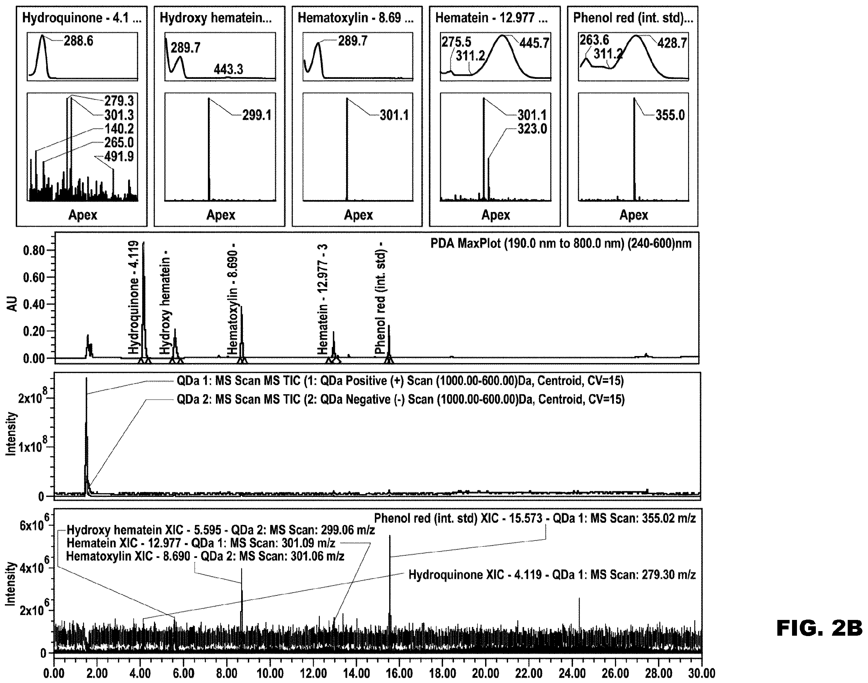

Chromatograms (FIGS. 1A and 2A) of both solutions showed similar qualitative responses (see also FIGS. 1B and 2B). The major peaks of hydroquinone, hydroxy hematein, hematoxylin, and hematein were all present in both chromatograms. The same unidentified minor peaks were present in both chromatograms. An internal standard was analyzed with each sample from which quantitative results were obtained. With the exception of hematoxylin levels, all of the components within the two solutions showed nearly equal levels. The racemic hematoxylin formulation showed about 1.5-fold the level of hematoxylin compared to the sample made with commercial hematoxylin. The results of both chromatograms are compiled in Table 1.

| Table 1. Results of HPLC Analysis (Relative responses compared against the internal standard) | | | | |
|---|---|---|---|---|
| **Sample ID** | **Hydroquinone** | **Hydroxy Hematein** | **Hematoxylin** | **Hematein** |
| Racemic Hematoxylin | 9.0 | 2.2 | 2.3 | 1.0 |
| Commercial Hematoxylin | 9.0 | 2.2 | 1.5 | 0.9 |

### Functional staining

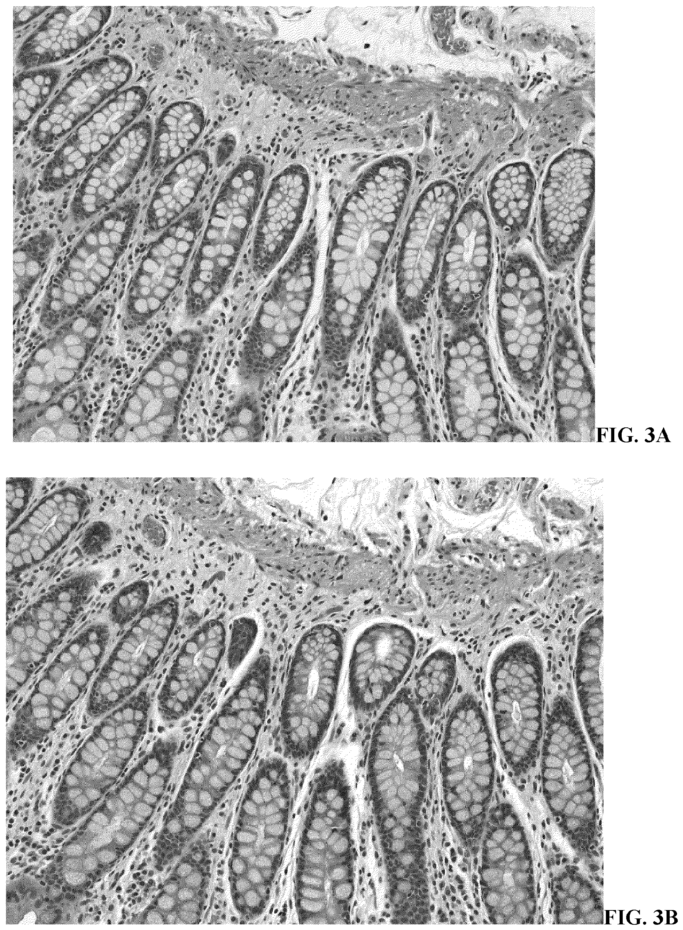

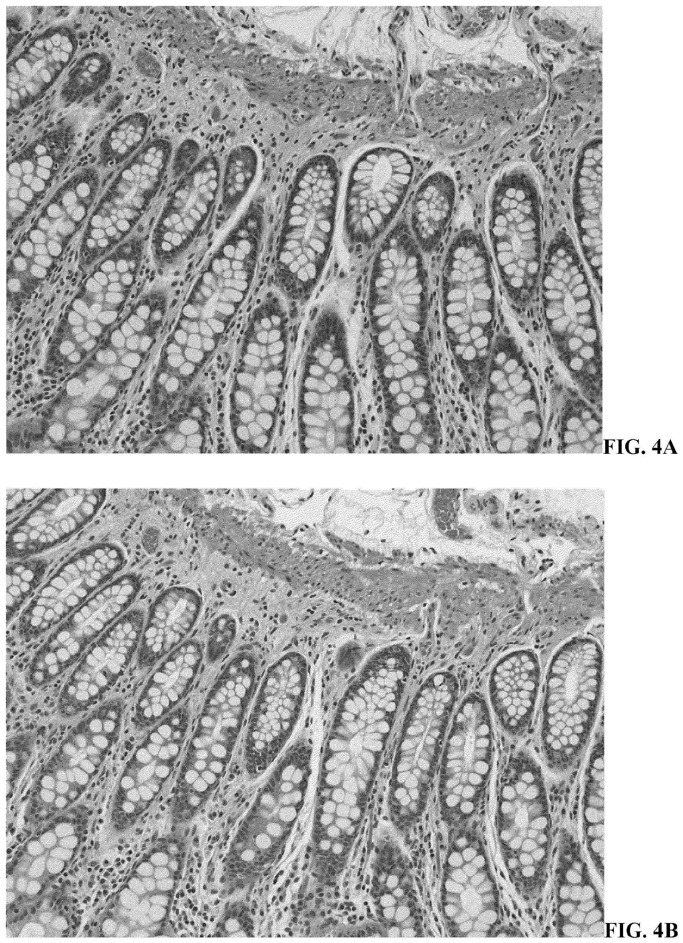

Eight pairs of 5-in-1 tissue slides were stained with a hematoxylin and eosin (H&E) stain on a VENTANA HE 600 instrument using the formulations made from racemic hematoxylin and commercial hematoxylin. The only significant difference observed with the staining results was that the solution made from commercial hematoxylin (see, e.g., FIGS. 3A and 3B) showed slightly more mucin staining than the solution made from racemic hematoxylin (see, e.g., FIGS. 4A and 4B).

### Discussion

The racemic and commercial hematoxylin solutions produced HPLC chromatograms having similar qualitative results indicating both hematoxylin sources were oxidized by sodium iodate in the formulation process to form hematein and hydroxy hematein. The racemic hematoxylin appeared to react chemically equivalent to the commercial hematoxylin.

The higher concentration of hematoxylin shown in the racemic hematoxylin chromatogram indicated that this hematoxylin source might be purer than the commercial source. The oxidation products of hematoxylin (hydroxy hematein and hematein) were equal in the two different solutions. If sodium iodate (the oxidizing agent) was a limiting reagent in the formulation and the racemic hematoxylin has a higher starting concentration of hematoxylin (higher purity), then after oxidation of the two solutions is complete, the levels of their oxidation products would be equal, but the racemic hematoxylin solution would have a higher level of unoxidized hematoxylin left over.

With regard to H&E staining on the VENTANA HE 600 instrument, equivalent hematoxylin solutions often show slight, but significant, differences in staining. These differences are due to variations associated with the staining process on the VENTANA HE 600 Instrument. Because the racemic hematoxylin and the commercial hematoxylin showed only a slight difference in staining (mucin staining), one cannot say that the solutions stained differently.

The testing described in this example indicated the racemic hematoxylin and the commercially-sourced hematoxylin appear equivalent by analysis and function.

### Example 2 - Semi-Synthesis of Racemic Hematoxylin

### 1.1 General Methods

All reactions were magnetically stirred and carried out under a positive pressure of inert gas (N₂ or argon) utilizing standard Schlenk-techniques. Glassware was dried repeatedly at 620 °C *in vacuo* prior to use. Liquid reagents and solvents were added by syringes or oven-dried stainless-steel cannulas through rubber septa. Solids were added under inert gas counter flow or were dissolved in appropriate solvents. Low-temperature reactions were carried out in a Dewar vessel filled with a cooling agent: acetone/dry ice (-78 °C) or H₂O/ice (0 °C). Reaction temperatures above room temperature were conducted in a heated oil bath. If literature-known procedures were followed, the respective reference was added to the experimental details. Yields refer to isolated homogenous and spectroscopically pure materials, if not indicated otherwise.

**1.1.1 Solvents and Reagents:** Dry solvents, such as acetone, tetrahydrofuran (THF), ethyl acetate and toluene were purchased from commercial suppliers and used as received. Solvents for extraction and flash column chromatography were purchased in HPLC grade. 6S,11R-Hemtoxylin (1) was purchased from *Sigma-Aldrich.* All other reagents and solvents were purchased from chemical suppliers (*Sigma-Aldrich, Acros Organics, Alfa Aesar, TCI Europe, abcr*) and were used as received.

**1.1.2 Chromatography:** Reactions and chromatography fractions were monitored by qualitative thin-layer chromatography (TLC) on silica gel F254 TLC plates from *Merck KGaA.* Analytes on the glass plates were visualized by irradiation with UV-light and/or by immersion of the TLC plate in an appropriate staining solution followed by heating with a hot-air gun (350 °C). The following staining solution was applied:
KMnO₄ staining solution (3.0 g KMnO₄, 20 g K₂CO₃, 5.0 mL aqueous 5.0 wt-% NaOH, 0.3 L H₂O).

Flash column chromatography was performed on Geduran^{®} Si60 (40-63 µm) silica gel from *Merck KGaA.* All fractions containing a desired substrate were combined and solvents were removed under reduced pressure followed by drying *in vacuo* (10⁻² mbar).

**1.1.3 NMR Spectroscopy:** NMR spectra were measured on an *Agilent* 400-MR DD2 400 MHz spectrometer equipped with a OneNMR Probe operating at 400 MHz for proton nuclei (100 MHz for carbon nuclei). DMSO-d₆ and CDCl₃ were purchased from *Sigma-Aldrich.* The ¹H NMR shifts are reported in ppm related to the residual shift of TMS. ¹H NMR shifts were calibrated to residual solvent resonances: DMSO-d₆ (2.50 ppm) and CDCl₃ (7.26 ppm). ¹³C NMR shifts were calibrated to the center of the multiplet signal of the residual solvent resonance: DMSO-d₆ (29.84 ppm) and CDCl₃ (77.16 ppm). ¹H NMR spectroscopic data are reported as follows: Chemical shift in ppm (multiplicity, coupling constants *J*, integration intensity). The multiplicities are abbreviated with s (singlet), br (broad signal), d (doublet), t (triplet), q (quartet), m (multiplet) and mc (centrosymmetric multiplet). In case of combined multiplicities, the multiplicity with the lesser coupling constant is stated first. Except for multiplets, the chemical shift of all signals, as well for centrosymmetric multiplets, is reported as the center of the resonance range. Additionally to ¹H and ¹³C NMR measurements, 2D NMR techniques as homonuclear correlation spectroscopy (COSY), heteronuclear single quantum coherence (HSQC) and heteronuclear multiple bond coherence (HMBC) were used to assign signals. Coupling constants *J* are reported in Hz. All NMR spectra were analyzed using the program ACD/Spectrus Processor 2015.2.7 from *Advanced Chemistry Development, Inc.*

**1.1.4 Mass Spectrometry:** Low resolution mass spectra (LRMS) were recorded on a HPLC-MS system from *Waters GmbH* (2695 Separations Module, 996 Photodiode Array Detector, MicromassZQ, *Grace* Vydac 218TP C18 5u) that was computer-controlled through *Waters* MassLynx V4.1. Only characteristic molecule fragments or molecule ion peaks are indicated for each analyte.

### 1.2 Synthesis Route

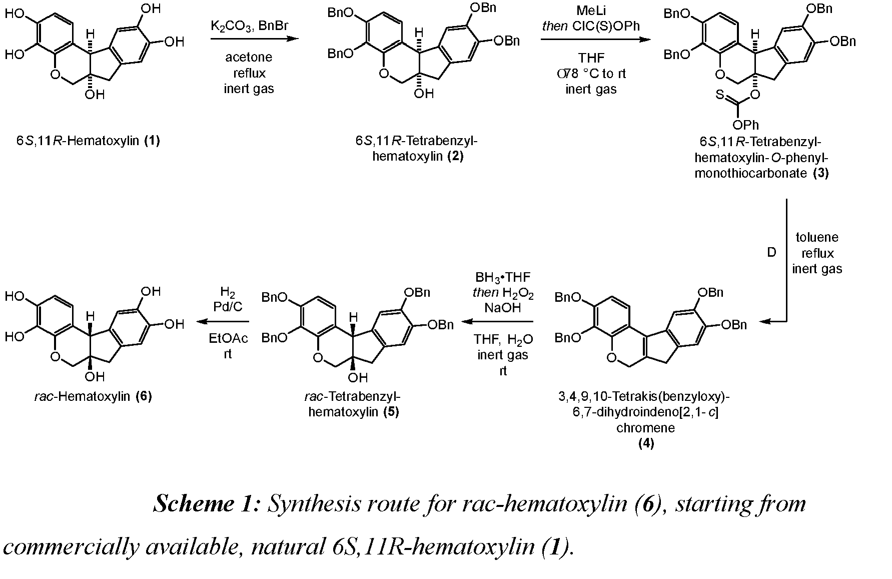

### 1.3 Synthetic Procedures

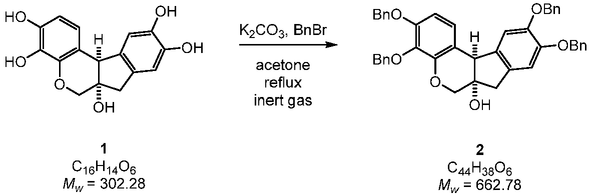

**Benzyl ether 2:** 6*S*,11*R*-Hemtoxylin (1, 1.00 g, 3.31 mmol, 1.00 eq) and K₂CO₃ (2.05 g, 14.9 mmol, 4.50 eq.) were dissolved in dry acetone (33 mL) under inert gas atmosphere at room temperature. Then, benzyl bromide (1.77 mL, 14.9 mmol, 4.50 eq.) was added in one portion and the resulting mixture was stirred vigorously and heated to 56 °C (oil bath temperature) for 20 hours. When TLC analysis indicated complete conversion of substance 1, the reaction was cooled to room temperature and quenched *via* addition to a stirred mixture of ethyl acetate (150 mL) and brine (100 mL). The layers were separated, and the aqueous phase extracted with ethyl acetate (75 mL, 2 times). The combined organic layers were dried over Na₂SO₄, filtered, and concentrated *in vacuo.* Final purification of crude benzyl ether **2** was achieved *via* flash column chromatography (silica, *n*-Hex:EtOAc = 80:20 gradient to 60:40) yielding 6*S*,11*R*-tetrabenzyl-hematoxylin (**2**, 2.01 g, 3.03 mmol, 92%) as yellowish solid.

**R*_{f}***(*n*-Hex:EtOAc = 2:3) = 0.60.

**¹H NMR** (CDCl₃, 400 MHz): *δ* = 7.46-7.27 (m, 20H), 6.92 (dd, *J* = 1.00*,* 8.66 Hz, 1H), 6.87 (d, *J =* 1.00, 1H), 6.80 (s, 1H), 6.69 (d, *J =* 8.78 Hz, 1H), 5.15 (s, 2H), 5.11 (s, 2H), 5.08 (s, 2H), 5.08 (s, 2H), 4.04 (s, 1H), 4.01 (dd, *J =* 1.38, 11.29 Hz, 1H), 3.72 (d, *J =* 11.04 Hz, 1H), 3.17 (d, *J =* 16.19 Hz, 1H), 2.84 (d, *J =* 15.43 Hz, 1H), 2.31 (s, 1H) ppm.

**¹³C NMR** (CDCl₃, 100 MHz): *δ* = 151.6, 149.1, 148.5, 148.0, 137.8, 137.5, 137.4, 137.4, 137.2, 137.0, 132.0, 128.9, 128.7, 128.6, 128.6, 128.2, 128.0, 127.9, 127.7, 127.5, 127.4, 125.0, 116.9, 112.5, 112.4, 108.4, 77.52, 75.3, 72.2, 71.8, 71.5, 70.4, 50.7, 41.2 ppm.

| | | |
|---|---|---|
| **ESI-LRMS** for C₄₄H₃₉O₆⁺ [MH⁺]: | calcd. | 663.3 |
| | found | 663.4. |

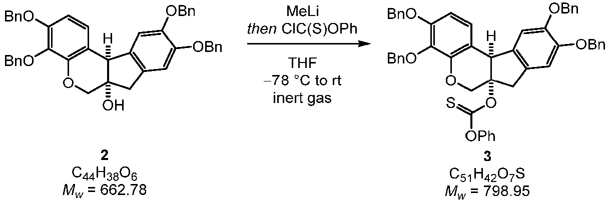

**Monothiocarbonate 3:** 6*S*,11*R*-Tetrabenzyl-hematoxylin (**2**, 0.50 g, 0.75 mmol, 1.00 eq.) was dissolved in dry THF (10.0 mL) under inert gas atmosphere at room temperature and subsequently cooled to -78 °C. Then, methyl lithium (0.59 mL, 0.94 mmol, 1.25 eq.) was added dropwise to the stirred solution. After stirring for 30 minutes at room temperature, the reaction was again cooled to -78 °C and O-phenyl chlorothionoformate (0.13 mL, 0.94 mmol, 1.25 eq.) was added dropwise. The resulting mixture was stirred for two hours at room temperature, upon which TLC analysis indicated full conversion of ether **2.** The reaction was quenched *via* addition to a stirred mixture of dichloromethane (100 mL) and sat. aqueous NaHCO₃ solution (75 mL). The layers were separated, and the aqueous phase extracted with ethyl acetate (75 mL, 2 times). The combined organic layers were dried over Na₂SO₄, filtered, and concentrated *in vacuo* (max. 30 °C). Final purification of crude monothiocarbonate **3** was achieved *via* flash column chromatography (silica, *n-*Hex:EtOAc = 95:5 gradient to 85:15), yielding 6S,11R-tetrabenzyl-hematoxylin-O-phenyl-monothiocarbonate (**3**, 0.53 g, 0.66 mmol, 87%) as yellowish foam.

**R*_{f}***(*n*-Hex:EtOAc = 2:1) = 0.75.

**¹H NMR** (CDCl₃, 400 MHz): *δ* = 7.46-7.25 (m, 23H), 7.10-7.08 (m, 2H), 6.96 (d, *J =* 1.00, 8.66 Hz, 1H), 6.89 (s, 1H), 6.82 (s, 1H), 6.71 (d, *J =* 8.66 Hz, 1H), 5.36 (dd, *J =* 1.76, 12.92 Hz, 1H), 5.15 (s, 2H), 5.13 (s, 2H), 5.09 (m, 2H), 4.60 (s, 1H), 3.75-3.70 (m, 2H), 3.59 (d, *J =* 16.94 Hz, 1H) ppm.

**¹³C NMR** (CDCl₃, 100 MHz): *δ* = 192.2, 153.1, 151.7, 149.3, 148.9, 148.0, 137.8, 137.4, 137.4, 137.3, 137.3, 134.9, 130.5, 129.6, 128.7, 128.6, 128.6, 128.6, 128.2, 128.0, 128.0, 127.7, 127.5, 127.4, 126.7, 124.5, 122.1, 115.5, 112.2, 111.8, 108.2, 89.9, 75.3, 72.1, 71.7, 71.5, 64.5, 49.3, 39.2 ppm.

| | | |
|---|---|---|
| **ESI-LRMS** for C₅₁H₄₃O₇S⁺ [MH⁺]: | calcd. | 799.3 |
| | found | 799.3. |

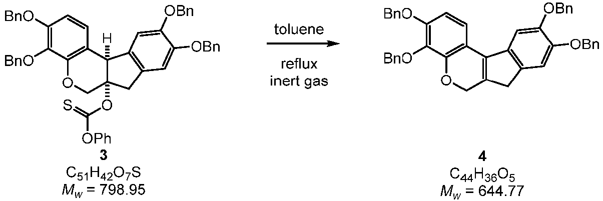

**Alkene 4:** 6*S*,11*R*-tetrabenzyl-hematoxylin-*O*-phenyl-monothiocarbonate (**3**, 470 mg, 0.59 mmol) was dissolved in dry toluene (15.0 mL) under inert gas atmosphere at room temperature. The reaction mixture was stirred vigorously and heated to 115 °C (oil bath temperature) for three hours, upon which TLC analysis indicated full conversion of substance **3.** The reaction was then cooled to room temperature and concentrated *in vacuo.* Thus obtained crude alkene **4** was purified *via* flash column chromatography (silica, *n*-Hex:EtOAc = 95:5 gradient to 70:30), yielding 3,4,9,10-tetrakis(benzyloxy)-6,7-dihydroindeno[2,1-c]chromen (**4**, 308 mg, 0.48 mmol, 81%) as colorless solid, which turns reddish upon exposure to air.

**R*_{f}***(*n*-Hex:EtOAc = 3:1) = 0.50.

**¹HNMR** (CDCl₃, 400 MHz): *δ* = 7.52-7.25 (m, 22H), 7.14 (s, 1H), 6.61 (d, *J* = 8.28 Hz, 1H), 5.21 (s, 2H), 5.19 (s, 2H), 5.15 (s, 2H), 5.11 (s, 4H), 3.33 (s, 1H) ppm.

**¹³C NMR** (CDCl₃, 100 MHz): *δ* = 152.7, 148.2, 147.8, 147.4, 137.9, 137.7, 137.5, 137.4, 137.2, 137.2, 135.3, 134.3, 131.8, 128.8, 128.7, 128.6, 128.6, 128.3, 128.0, 128.0, 128.0, 127.9, 127.7, 127.6, 127.5, 117.8, 116.5, 112.4, 109.4, 106.6, 75.3, 72.7, 72.0, 71.2, 67.2, 37.5 ppm.

| | | |
|---|---|---|
| **ESI-LRMS** for C₄₄H₃₇O₅⁺ [MH⁺]: | calcd. | 645.3 |
| | found | 645.5. |

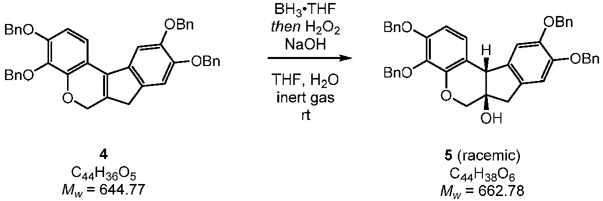

***rac*-Benzyl ether 5:** Alkene **4** (200 mg, 0.31 mmol, 1.00 eq.) was dissolved in dry THF (5.0 mL) under inert gas atmosphere at room temperature and subsequently cooled to 0-4 °C. Then, borane tetrahydrofuran complex (0.62 mL, 1 M in THF, 0.62 mmol, 2.00 eq.) was added slowly under stirring. The resulting mixture was stirred at room temperature for 4 hours, upon which TLC analysis indicated full consumption of substance **4.** Then, absolute ethanol (1.00 mL) was added slowly (caution: H₂ evolution!) and stirring was continued for another 10 minutes. Thereafter, aqueous sodium hydroxide solution (3 M, 2.0 mL) and hydrogen peroxide (30 wt-%, 0.8 mL) were added and the reaction was vigorously stirred for further 90 minutes. After diluting with dichloromethane (75 mL) and water (50 mL), the layers were separated and the aqueous phase was extracted with dichloromethane (50 mL, 2 times). The combined organic layers were washed with brine (50 mL), dried over Na₂SO₄, filtered, and concentrated *in vacuo.* Final purification of crude *rac*-benzyl ether **5** was achieved *via* flash column chromatography (silica, *n*-Hex:EtOAc = 80:20 gradient to 60:40), yielding *rac-*tetrabenzyl-hematoxylin (5, 194 mg, 0.29mmol, 94%) as orange foam.

**R*_{f}***(*n*-Hex:EtOAc = 2:3) = 0.60.

**¹H NMR** (DMSO-D₆, 400 MHz): *δ* = 7.46-7.27 (m, 20H), 7.11-7.08 (s, 2H), 6.93 (s, 1H), 6.74 (d, *J =* 8.78 Hz, 1H), 5.14-5-04 (m, 6H), 4.91 (dd, *J =* 1.13, 11.67 Hz, 2H), 3.97 (s, 1H), 3.90 (d, *J =* 11.29 Hz, 1H), 3.76 (d, *J =* 11.04 Hz, 1H), 2.90 (s, 2H) ppm.

**¹H NMR** (CDCl₃, 400 MHz), **¹³C NMR** (CDCl₃, 100 MHz): *δ = Data matches those recorded for compound **2.***

| | | |
|---|---|---|
| **ESI-LRMS** for C₄₄H₃₉O₆⁺ [MH⁺]: | calcd. | 663.3 |
| | found | 663.4. |

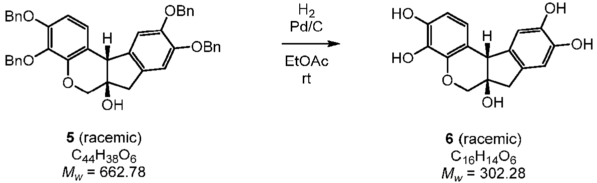

***rac*-Haemtoxylin 6^{[1-3]}**: *rac*-Tetrabenzyl-hematoxylin (**5**, 600 mg, 0.91 mmol, 1.00 eq.) was dissolved in dry, degassed ethyl acetate (5.0 mL) under inert gas atmosphere at room temperature. To this, palladium on charcoal (96.3 mg, 10 wt-% Pd, 0.09 mmol, 0.10 eq. Pd) were added and the atmosphere was exchanged with hydrogen *via* evacuating and back-filling (3 cycles). The resulting mixture was vigorously stirred for two days, upon which TLC analysis indicated full conversion to substance **6.** Subsequently, the suspension was filtered over a plug of degassed Celite (degassed ethyl acetate washings) and concentrated *in vacuo* under an inert gas atmosphere. The resulting orange, glassy solid (250 mg) was crystallized from degassed water to yield rac-hematoxylin (**6**, 187 mg, 0.62 mmol, 68%) as a yellowish, brown solid.

**R*_{f}***(*n*-Hex:EtOAc = 2:3) = 0.10.

**¹H NMR** (DMSO-D₆, 400 MHz): *δ* = 8.57 (s, br, 3H), 8.21 (s, br, 1H), 6.64-6.61 (m, 2H), 6.53 (s, 1H), 6.42 (d, *J =* 9.54 Hz, 1H), 5.27 (s, br, 1H), 3.92-3.86 (m, 2H), 3.59 (d, *J =* 10.29 Hz, 1H), 2.88 (d, *J =* 15.43 Hz, 1H), 2.72 (d, *J*= 15.31 Hz, 1H) ppm.

**¹³C NMR** (DMSO-D₆, 100 MHz): *δ* = 144.2, 144.0, 143.9, 142.5, 135.6, 133.2, 129.7, 119.3, 115.2, 112.0, 111.7, 108.7, 76.3, 69.7, 49.9, 42.0 ppm.

| | | |
|---|---|---|
| **ESI-LRMS** for C₁₆H₁₃O₆⁻ [(M-H)⁻]: | calcd. | 301.1 |
| | found | 301.3. |

### Example 3 - Synthetic Hematoxylin Equivalency Analysis

Currently, hematoxylin is extracted from heartwood of the logwood tree by a small number of commercial producers. The product often varies from batch-to batch, and between manufactures in both the level of impurities, and in the ratio of hematoxylin to haematein. These factors suggest that synthetic hematoxylin could provide a more consistent and potentially superior alternative to the natural product currently provided by commercial producers.

The staining performance of synthetic hematoxylin was evaluated against commercial hematoxylin purchased from Abbey Color, Inc. (lot #7740). Racemic synthetic hematoxylin was produced following the procedure described by Otto Dann and Hans Hofman, "Die Synthese von (+/-)- Hamatoxylin, Chromane (XVII), 1965, pages 1498-1504. Staining performance was evaluated across the entire suite of Ventana products containing hematoxylin. Stains included elastic NF hematoxylin, HE600 hematoxylin, trichrome hematoxylin, mucicarmine iron hematoxylin, hematoxylin I, and hematoxylin II. For each stain evaluated, formulations were made with synthetic hematoxylin and commercial hematoxylin. Equivalency was measured using a 16 pair analysis (32 slides each). All test slides were analyzed by a qualified reader.

In general, the synthetic hematoxylin performance was equivalent or better than the natural product. All slides using the synthetic formulation in Hem II were outstanding, with the nuclear chromatin detail often better than the formulation using the natural product. All of the special stains where the synthetic formulation was tested were equivalent or better to the natural formulation.

### Materials and Methods

Elastic NF Hematoxylin was prepared in accordance with Ventana MF 09186212001, rev C. HE 600 Hematoxylin was prepared in accordance with Ventana MF 07283270001, rev M. Trichrome Hematoxylin A was prepared in accordance with Ventana MF 06518168001, rev F. Iron Hematoxylin A was prepared in accordance with: Ventana MF 75001, rev P. In all cases, 20 ml of each formulation was produced, allowing for the staining of 100 slides each.

### Preparation of Hematoxylin I: 0.3 g

### Materials:

Water, deionized
Ethylene Glycol, Part # 10547
Hematoxylin Dye, Material # 06002960001 or synthetic material
Sodium Iodate, BeanTown Chemical, Catalog # 212330-100G
Aluminum Sulfate, Part # 10357
Acetic Acid, Glacial, VWR, Product # 0714-500ML
Tween 20, Sigma, Catalog # P-7949

### Procedure:

Mix 56.25 ml of water and 20.87 g of ethylene glycol
Add 0.30 g of hematoxylin and 36.0 mg of sodium iodate
Stir for 20 min at room temperature
Add 5.28 g of aluminum sulfate and 1.5 ml of acetic acid
Stir for 1 h at room temperature
Filter the solution
Add 75.0 mg of Tween 20

### Preparation of Hematoxylin II: 0.15 g

### Materials:

Water, deionized
Ethylene Glycol, Part # 10547
Hematoxylin Dye, Material # 06002960001 or synthetic material
Sodium Iodate, BeanTown Chemical, Catalog # 212330-100G
Aluminum Sulfate, Part # 10357
Acetic Acid, Glacial, VWR, Product # 0714-500ML
Tween 20, Sigma, Catalog # P-7949

### Procedure:

Mix 56..5 ml of water and 20.87 g of ethylene glycol
Add 0.15 g of hematoxylin and 18.0 mg of sodium iodate
Stir for 20 min at room temperature
Add 1.32 g of aluminum sulfate and 1.5 ml of acetic acid
Stir for 1 h at room temperature
Filter the solution
Add 75.0 mg of Tween 20
Note: solutions are stored at room temperature and aged 48 hours before use.

### Hematoxylin I Dilution Preparation and Staining

(1) Made 72 mL of Acetic Acid / PEG 200 stock using 11.6 mL acetic acid (P/N 10040) and 62.4 mL PEG 200 (P/N 10068). Mixed by inverting ten times.
(2) Prepared a series of dilutions with the amount of required materials listed below:
Add the appropriate amount of water to a series of suitably sized containers.
Add the PEG / acetic acid stock solution.
Add the appropriate volume of Hematoxylin raw material.
Mix by inversion ten times.
Place dilutions into labeled customer fillable dispensers and label with generic counterstain barcode labels.

(3) Used qualified Symphony MTB (P/N 78T7000) to test the dilutions using the following test protocol:
Select the Negative Control Mouse (Ig) P/N 760-2014 as the primary antibody in the protocol. Select a 16-minute primary antibody incubation.
For all the Hematoxylin dilutions select a 4-minute counterstain incubation.
Select a 4-minute Bluing Reagent (P/N 760-2037) incubation.

| Hematoxylin concentration | Volume of DI Water (P/N 10001) | Volume of Acetic Acid / PEG 200 stock | Volume of in house Hematoxylin | Total Volume |
|---|---|---|---|---|
| 8% | 6.35 mL | 2.85 mL | 0.8 mL | 10 mL |
| 10% | 6.15 mL | 2.85 mL | 1.0 mL | 10 mL |
| 12% | 5.95 mL | 2.85 mL | 1.2 mL | 10 mL |
| 14% | 5.75 mL | 2.85 mL | 1.4 mL | 10 mL |
| 16% | 5.55 mL | 2.85 mL | 1.6 mL | 10 mL |
| 18% | 5.35 mL | 2.85 mL | 1.8 mL | 10 mL |
| 20% | 5.15 mL | 2.85 mL | 2.0 mL | 10 mL |
| 22% | 4.95 mL | 2.85 mL | 2.2 mL | 10 mL |
| 24% | 4.75 mL | 2.85 mL | 2.4 mL | 10 mL |
| 26% | 4.55 mL | 2.85 mL | 2.6 mL | 10 mL |
| 28% | 4.35 mL | 2.85 mL | 2.8 mL | 10 mL |
| 30% | 4.15 mL | 2.85 mL | 3.0 mL | 10 mL |
| 32% | 3.95 mL | 2.85 mL | 3.2 mL | 10 mL |
| 34% | 3.75 mL | 2.85 mL | 3.4 mL | 10 mL |
| 36% | 3.55 mL | 2.85 mL | 3.6 mL | 10 mL |

### Hematoxylin II Dilution Preparation and Staining

1.Prepared a series of dilutions with the amounts of required materials listed below.
   Add the appropriate amount of water to a series of suitably sized containers.
   Add the required amount of Glacial Acetic Acid (P/N 10040).
   the required amount of Polyethylene Glycol 200 (P/N 10068).
   Add the required amount of in house Hematoxylin II Counterstain.
   Mix by inversion ten times.
   Place below dilutions into labeled customer fillable dispensers and label with generic counterstain barcode labels.
2. Use qualified Symphony MTB (P/N 78T7000) to test the dilutions using the following test protocol:
   Select the Negative Control Mouse (Ig) P/N 760-2014 as the primary antibody in the protocol. Select a 16-minute primary antibody incubation.
   For all the Hematoxylin II dilutions select a 4-minute counterstain incubation.

Select a 4-minute Bluing Reagent (P/N 760-2037) incubation.

| Hematoxylin II Concentration | Volume of DI Water (P/N 10001) | Volume of Acetic Acid (P/N 10040) | Volume of PEG 200 (P/N 10068) | Volume of in house Hematoxylin | Total Volume |
|---|---|---|---|---|---|
| 32% | 2.8 mL | 1.6 mL | 2.4 mL | 3.2 mL | 10 mL |
| 34% | 2.6 mL | 1.6 mL | 2.4 mL | 3.4 mL | 10 mL |
| 36% | 2.4 mL | 1.6 mL | 2.4 mL | 3.6 mL | 10 mL |
| 38% | 2.2 mL | 1.6 mL | 2.4 mL | 3.8 mL | 10 mL |
| 40% | 2.0 mL | 1.6 mL | 2.4 mL | 4.0 mL | 10 mL |
| 42% | 1.8 mL | 1.6 mL | 2.4 mL | 4.2 mL | 10 mL |
| 44% | 1.6 mL | 1.6 mL | 2.4 mL | 4.4 mL | 10 mL |
| 46% | 1.4 mL | 1.6 mL | 2.4 mL | 4.6 mL | 10 mL |
| 48% | 1.2 mL | 1.6 mL | 2.4 mL | 4.8 mL | 10 mL |
| 50% | 1.0 mL | 1.6 mL | 2.4 mL | 5.0 mL | 10 mL |
| 52% | 0.8 mL | 1.6 mL | 2.4 mL | 5.2 mL | 10 mL |
| 54% | 0.6 mL | 1.6 mL | 2.4 mL | 5.4 mL | 10 mL |
| 56% | 0.4 mL | 1.6 mL | 2.4 mL | 5.6 mL | 10 mL |
| 58% | 0.2 mL | 1.6 mL | 2.4 mL | 5.8 mL | 10 mL |
| 60% | 0 mL | 1.6 mL | 2.4 mL | 6.0 mL | 10 mL |

After run completion the slides were cleaned, dehydrated, and coversliped per OP2100-028 and OP2100-030.

The slides were read by a qualified reader and a titer of 58% with an incubation time of 4 minutes was chosen for the standard formulation.

| **BenchMark XT** | |
|---|---|
| **Deparaffinization** | Selected |
| **Temperature** | 37°C |
| **Cell Conditioning** | None |
| **Enzyme** | None |
| **Primary** | Negative Control (16 min) |
| **Counterstain** | Test Material - 4 minutes and 8 minutes |
| **Post-Counterstain** | Bluing - 4 minutes |

### Conclusion

Overall, the synthetic hematoxylin performance was equivalent or better than the natural formulation. The only situation where the synthetic performance was problematic was in the Hem I formulation, where the synthetic formulation seemed to give even more exaggerated cytoplasmic staining, almost at the same intensity as the target nuclear staining. This seems to be a problem with the formulation, and not with the dye itself.

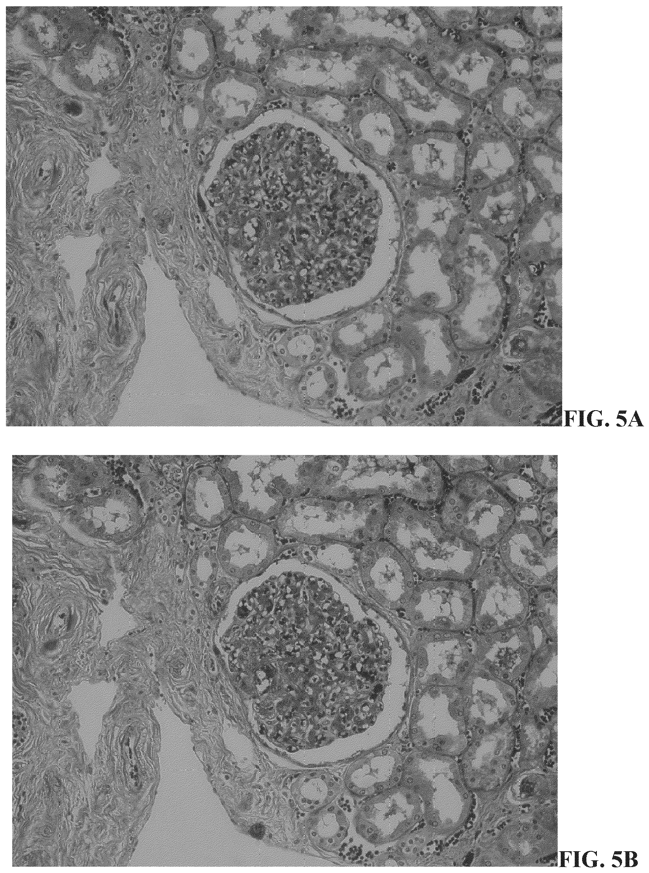

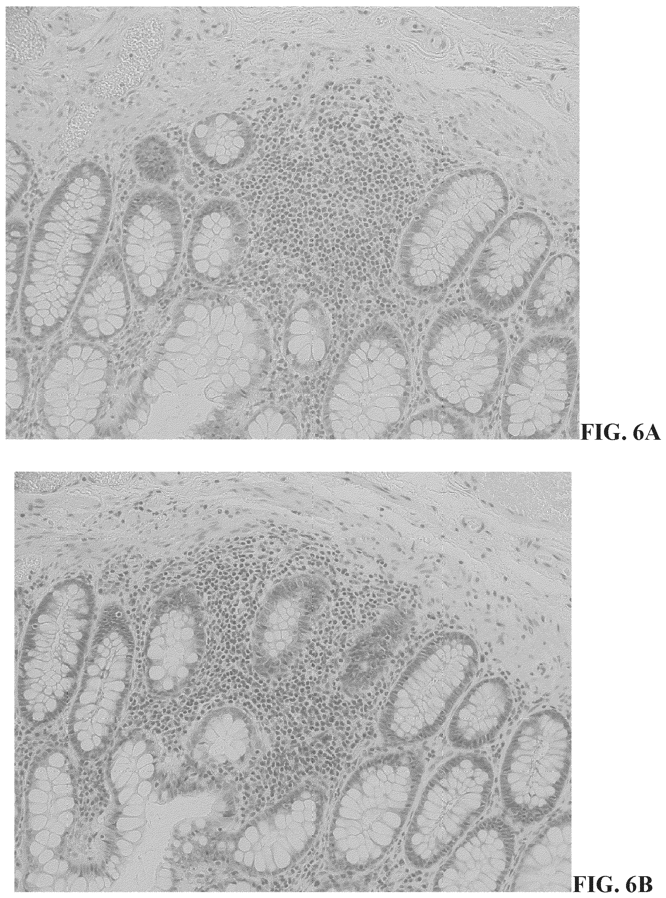

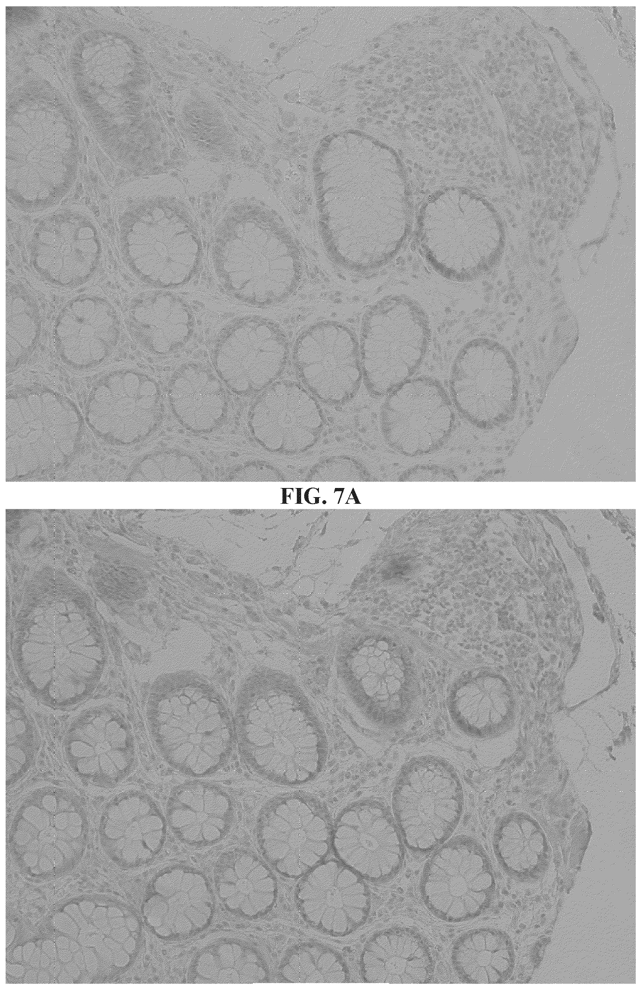

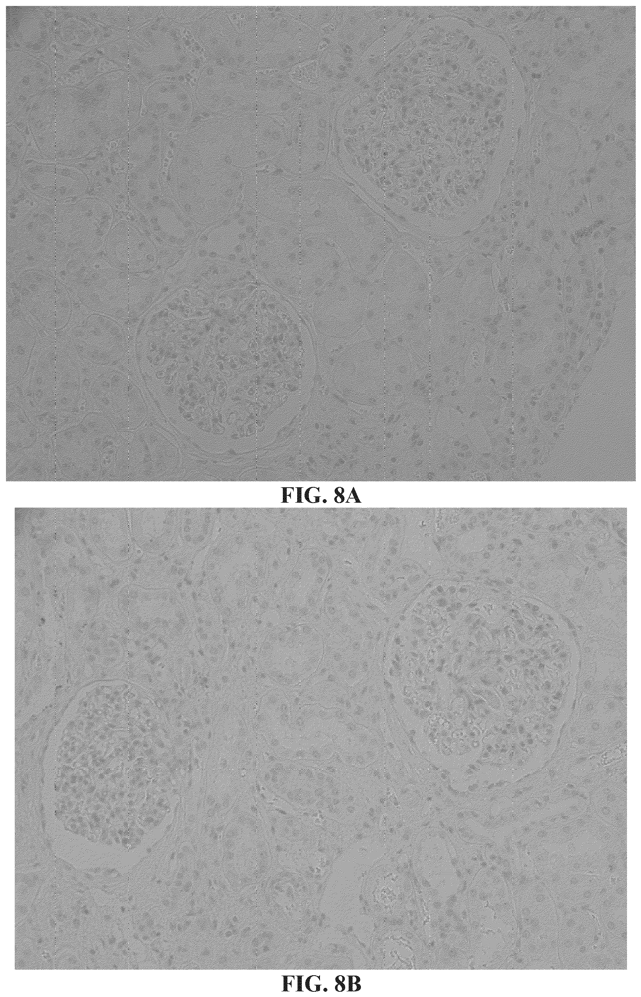

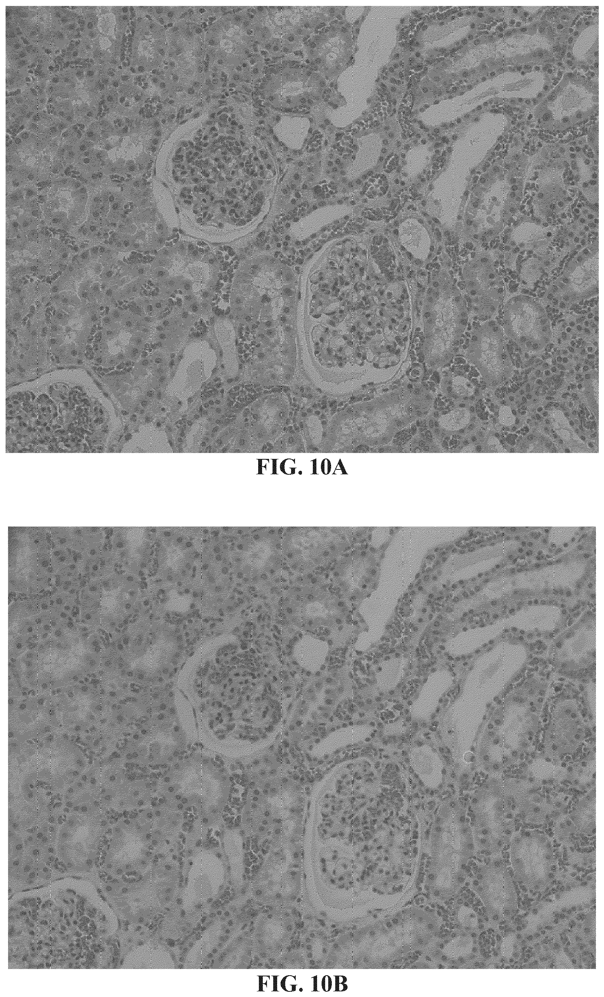

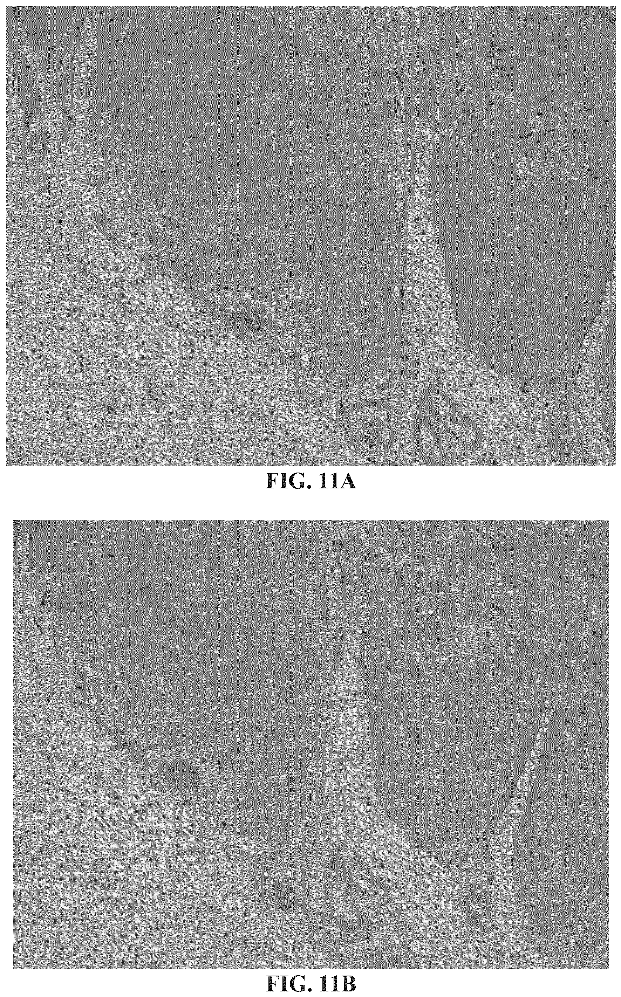

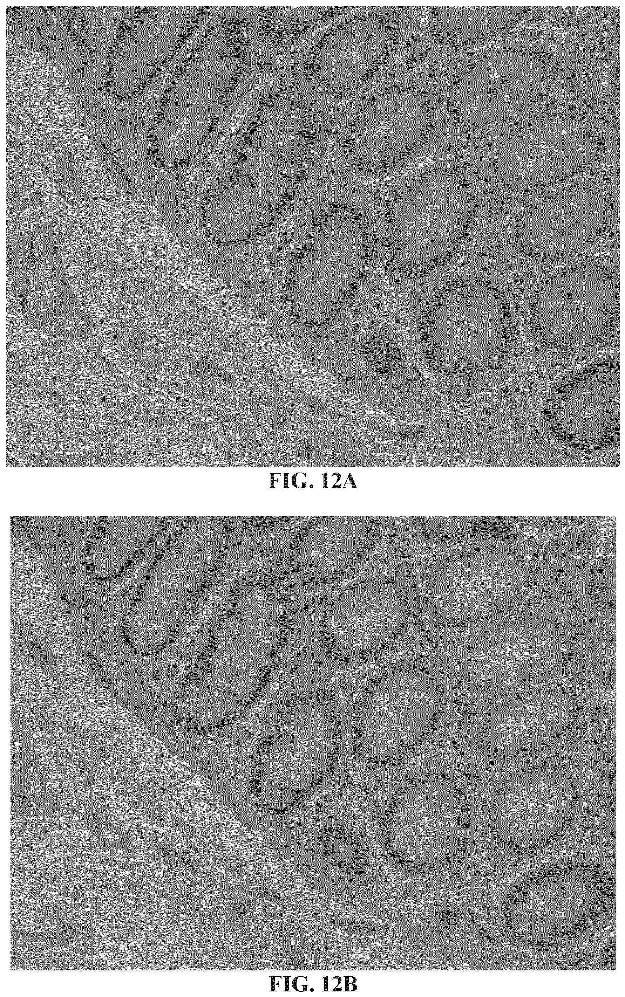

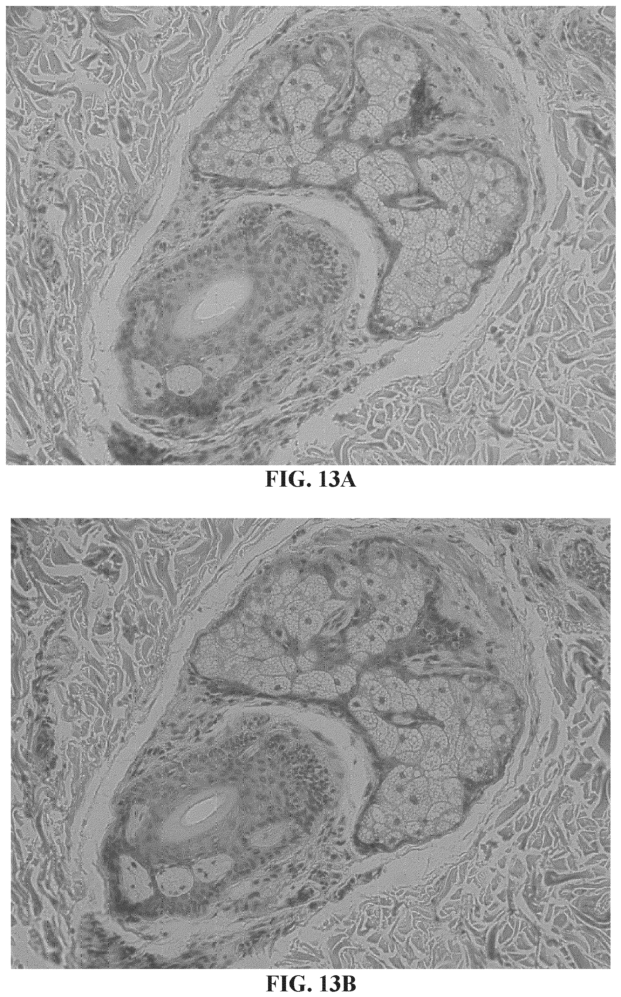

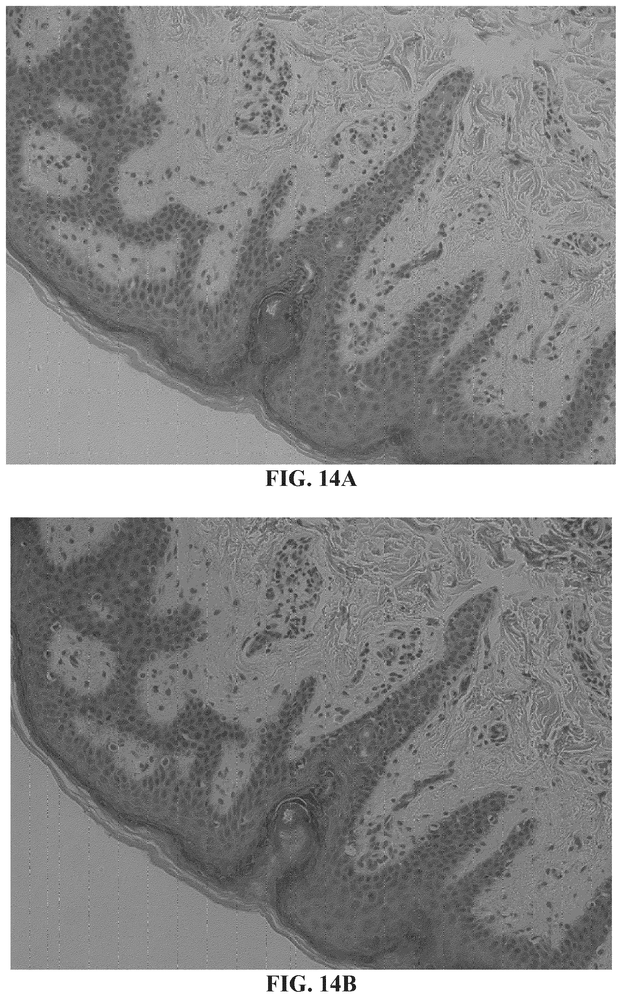

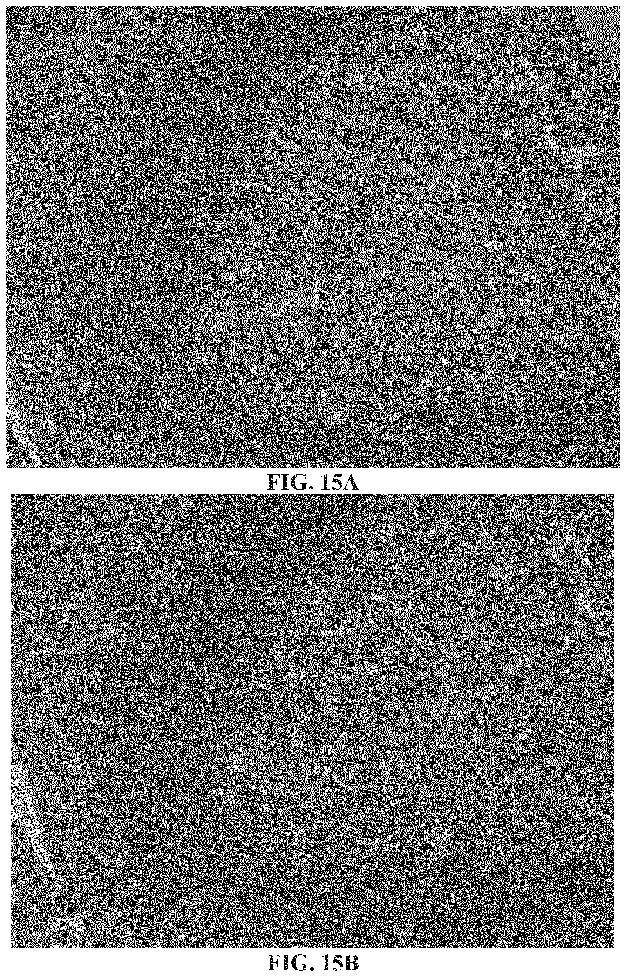

As illustrated in FIGS. 10 - 15, slides using the synthetic HE600 formulation were superior to the natural formulations. All HE600 slides using the synthetic formulation appear to be crisper and provide more nuclear chromatin detail. All slides using the synthetic formulation in Hem II were excellent, with the nuclear chromatin detail often better than the natural. This is greater detail is particular evident in in FIGS. 7A and 7B (colon) and FIGS. 8A and 8B (kidney). All of the special stains where the synthetic formulation was tested were equivalent or better to the natural. Staining with synthetic trichrome hematoxylin, FIGS. 5A and 5B, produced staining equivalent to or slightly better than the natural formulation. In the case of mucicarmine iron hematoxylin, FIGS. 6A and 6B, the synthetic formulation produced staining with much higher contrast clearly superior to that produced by the natural formulation. It should be noted that although the synthetic hematoxylin gave the appropriate staining pattern on the elastic slides, the staining was significantly lighter than those stained with commercial hematoxylin. This was expected, as the synthetic hematoxylin failed to completely dissolve in ethanol when following the SOP for Elastic NF hematoxylin.

### References:

[1] Ch. Bettinger, H. W. Zimmermann, Hisotchemistry 1991, 96, 215-228.
[2] J. A. Kiernan, Biotechnic & Histochemistry 2018, 93(2), 133-148.
[3] O. Kel, A. Fürstenberg, N. Mehanna, C. Niclas, B. Laleu, M. Hammarson, B. Albinsson, J. Lacour, E. Vauthey, Chem. Eur. J. 2013, 19, 7173-7180.
[4] R. Corradini, S. Sforza, T. Tedeschi, R. Marchelli, Chirality 2007, 19, 269 - 294.
[5] Y. Xu, Y. X. Zhang, H. Sugiyama, T. Umano, H. Osuga, K. Tanaka, J. Am. Chem. Soc. 2004, 126, 6566-6567.
[6] H. C. Becker, B. Norden, J. Am. Chem. Soc. 2000, 122, 8344-8349.
[7] a) K. Okamoto, M. Noji, T. Tashiro, Y. Kidani, Chem. Pharm. Bull. 1981, 29, 929-939; b) K. Vickery, A. M. Bonin, R. R. Fenton, S. Omara, M. J. McKeage, P. J. Russell, T. W. Hambley, J. Med. Chem. 1993, 36, 3663-3668; c) R. R. Fenton, W. J. Easdale, H. M. Er, S. M. Omara, M. J. McKeage, P. J. Russell, T. W. Hambley, J. Med. Chem. 1997, 40, 1090-1098; d) J. Malina, J. Kasparkova, G. Natile, V. Brabec, Chem. Biol. 2002, 9, 629-638.
[8] a) B. Nordén, F. Tjerneld, FEBS Lett. 1976, 67, 368-370; b) J. K. Barton, L. A. Basile, A. Danishefsky, A. Alexandrescu, Proc. Natl. Acad. Sci. USA 1984, 81, 1961-1965; c) A. Sitlani, E. C. Long, A. M. Pyle, J. K. Barton, J. Am. Chem. Soc. 1992, 114, 2303-2312; d) C. L. Kielkopf, K. E. Erkkila, B. P. Hudson, J. K. Barton, D. C. Rees, Nat. Struct. Biol. 2000, 7, 117-121.
[9] D. L. Boger, D. S. Johnson, Angew. Chem. Int. Ed. 1996, 35, 1438-1474.
[10] A. H. J. Wang, G. Ughetto, G. J. Quigley, A. Rich, Biochemistry 1987, 26, 1152-1163.
[11] X. Qu, J. O. Trent, I. Fokt, W. Priebe, J. B. Chaires JB., Proc Natl Acad Sci USA 2000, 97, 12032-12037.
[12] a) M. P. Singh, B. Plouvier, G. C. Hill, J. Gueck, R. T. Pon, J. W. Lown, J. Am. Chem. Soc. 1994, 116, 7006-7020; b) J.W. Trauger, E. E. Baird, P. B. Dervan, Nature 1996, 382, 559 -561; c) C. L. Kielkopf, S. White, J. W. Szwewczyk, J. M. Turner, E. E. Baird, P. B. Dervan, D. C. Rees, Science 1998, 282, 111-115; d) D. M. Herman, E. E. Baird, P. B. Dervan, J. Am. Chem. Soc. 1998, 120, 1382-1391; e) P. B. Dervan, Bioorg. Med. Chem. 2001, 9, 2215-2235; f) P. M. Reddy, J. W. Toprowski, A. L. Kahane, T. C. Bruice, Bioorg. Med. Chem. Lett. 2005, 15, 5531-5536.

## Claims

1. A hematoxylin formulation comprising: a solvent, racemic hematoxylin, a chemical oxidant, a mordant, a stabilizer, and an antioxidant.

2. The hematoxylin formulation of claim 1, wherein an amount of the chemical oxidant present in the hematoxylin formulation is sufficient to convert at least a portion of the racemic hematoxylin to hematein.

3. The hematoxylin formulation of claim 1 or 2, wherein the solvent is an aqueous solvent and wherein the antioxidant is a water-soluble antioxidant.

4. The hematoxylin formulation of claim 3, wherein the water-soluble antioxidant comprises hydroquinone.

5. The hematoxylin formulation of claim 1, wherein the solvent comprises one or more of water, a lower alkanol, and a polyol.

6. The hematoxylin formulation of claim 1, wherein the solvent comprises water and a polyol.

7. The hematoxylin formulation of claim 6, wherein the polyol is selected from the group consisting of propylene glycol, poly (ethylene glycol), and poly (propylene glycol).

8. The hematoxylin formulation of any of claims 1 to 7, wherein between about 1% and about 50% of the hematoxylin is oxidized to hematein by the chemical oxidant.

9. The hematoxylin formulation of any of claims 1 to 8, wherein the stabilizer comprises cyclodextrin or a cyclodextrin derivative.

10. The hematoxylin formulation of claim 9, wherein the cyclodextrin or cyclodextrin derivative comprises β-cyclodextrin and a β-cyclodextrin derivative.

11. The hematoxylin formulation of any of claims 1 to 10, further comprising an acid.

12. The hematoxylin formulation of any of claims 1 to 11, wherein the hematoxylin formulation is free from an acid additive.

13. A method for staining a biological sample, comprising: contacting the biological sample with a racemic hematoxylin formulation, the racemic hematoxylin formulation comprising a solvent, hematoxylin, a mordant, an antioxidant, a stabilizer, and an amount of a chemical oxidant sufficient to convert at least a portion of the racemic hematoxylin to hematein.

14. The method of claim 13, wherein the stabilizer is selected from the group consisting of a polysaccharide, a cryptand, a cryptophane, a cavitand, a crown ether, a dendrimer, a nanotube, a calixarene, a valinomycin, a nigericin, and combinations thereof.

15. Use of racemic hematoxylin for staining a biological sample, wherein the hematoxylin formulation comprises a solvent, racemic hematoxylin, a chemical oxidant, a mordant, a stabilizer, and an antioxidant; and/or wherein the hematoxylin formulation is the hematoxylin formulation of any of claims 1 to 12.

## Patentansprüche

1. Hämatoxylinformulierung, umfassend: ein Lösungsmittel, racemisches Hämatoxylin, ein chemisches Oxidationsmittel, ein Beizmittel, einen Stabilisator und ein Antioxidationsmittel.

2. Hämatoxylinformulierung nach Anspruch 1, wobei eine Menge des in der Hämatoxylinformulierung vorhandenen chemischen Oxidationsmittels ausreicht, um mindestens einen Teil des racemischen Hämatoxylins in Hämatein umzuwandeln.

3. Hämatoxylinformulierung nach Anspruch 1 oder 2, wobei das Lösungsmittel ein wässriges Lösungsmittel ist und wobei das Antioxidationsmittel ein wasserlösliches Antioxidationsmittel ist.

4. Hämatoxylinformulierung nach Anspruch 3, wobei das wasserlösliche Antioxidationsmittel Hydrochinon umfasst.

5. Hämatoxylinformulierung nach Anspruch 1, wobei das Lösungsmittel eines oder mehrere von Wasser, einem niederen Alkanol und einem Polyol umfasst.

6. Hämatoxylinformulierung nach Anspruch 1, wobei das Lösungsmittel Wasser und ein Polyol umfasst.

7. Hämatoxylinformulierung nach Anspruch 6, wobei das Polyol ausgewählt ist aus der Gruppe, bestehend aus Propylenglykol, Poly(ethylenglykol) und Poly(propylenglykol).

8. Hämatoxylinformulierung nach einem der Ansprüche 1 bis 7, wobei zwischen etwa 1 % und etwa 50 % des Hämatoxylins durch das chemische Oxidationsmittel zu Hämatein oxidiert sind.

9. Hämatoxylinformulierung nach einem der Ansprüche 1 bis 8, wobei der Stabilisator Cyclodextrin oder ein Cyclodextrinderivat umfasst.

10. Hämatoxylinformulierung nach Anspruch 9, wobei das Cyclodextrin oder Cyclodextrinderivat β-Cyclodextrin und ein β-Cyclodextrinderivat umfasst.

11. Hämatoxylinformulierung nach einem der Ansprüche 1 bis 10, des Weiteren umfassend eine Säure.

12. Hämatoxylinformulierung nach einem der Ansprüche 1 bis 11, wobei die Hämatoxylinformulierung frei von einem Säurezusatz ist.

13. Verfahren zum Färben einer biologischen Probe, umfassend: Inkontaktbringen der biologischen Probe mit einer racemischen Hämatoxylinformulierung, wobei die racemische Hämatoxylinformulierung ein Lösungsmittel, Hämatoxylin, ein Beizmittel, ein Antioxidationsmittel, einen Stabilisator und eine Menge eines chemischen Oxidationsmittels umfasst, die ausreicht, um mindestens einen Teil des racemischen Hämatoxylins in Hämatein umzuwandeln.

14. Verfahren nach Anspruch 13, wobei der Stabilisator ausgewählt ist aus der Gruppe, bestehend aus einem Polysaccharid, einem Kryptand, einem Kryptophan, einem Kavitanden, einem Kronenether, einem Dendrimer, einem Nanoröhrchen, einem Calixaren, einem Valinomycin, einem Nigericin und Kombinationen davon.

15. Verwendung von racemischem Hämatoxylin zum Färben einer biologischen Probe, wobei die Hämatoxylinformulierung ein Lösungsmittel, racemisches Hämatoxylin, ein chemisches Oxidationsmittel, ein Beizmittel, einen Stabilisator und ein Antioxidationsmittel umfasst; und/oder wobei die Hämatoxylinformulierung die Hämatoxylinformulierung nach einem der Ansprüche 1 bis 12 ist.

## Revendications

1. Formulation d'hématoxyline comprenant : un solvant, de l'hématoxyline racémique, un oxydant chimique, un mordant, un stabilisant et un antioxydant.

2. Formulation d'hématoxyline selon la revendication 1, dans laquelle une quantité de l'oxydant chimique présent dans la formulation d'hématoxyline est suffisante pour convertir au moins une partie de l'hématoxyline racémique en hématéine.

3. Formulation d'hématoxyline selon la revendication 1 ou 2, dans laquelle le solvant est un solvant aqueux et dans laquelle l'antioxydant est un oxydant hydrosoluble.

4. Formulation d'hématoxyline selon la revendication 3, dans laquelle l'antioxydant hydrosoluble comprend l'hydroquinone.

5. Formulation d'hématoxyline selon la revendication 1, dans laquelle le solvant comprend un ou plusieurs parmi l'eau, un alcanol inférieur et un polyol.

6. Formulation d'hématoxyline selon la revendication 1, dans laquelle le solvant comprend l'eau et un polyol.

7. Formulation d'hématoxyline selon la revendication 6, dans laquelle le polyol est choisi dans le groupe constitué par le propylène glycol, un poly(éthylène glycol) et un poly(propylène glycol).

8. Formulation d'hématoxyline selon l'une quelconque des revendications 1 à 7, dans laquelle entre environ 1 % et environ 50 % de l'hématoxyline sont oxydés en hématéine par l'oxydant chimique.

9. Formulation d'hématoxyline selon l'une quelconque des revendications 1 à 8, dans laquelle le stabilisant comprend la cyclodextrine ou un dérivé de cyclodextrine.

10. Formulation d'hématoxyline selon la revendication 9, dans laquelle la cyclodextrine ou le dérivé de cyclodextrine comprend la β-cyclodextrine et un dérivé de β-cyclodextrine.

11. Formulation d'hématoxyline selon l'une quelconque des revendications 1 à 10, comprenant en outre un acide.

12. Formulation d'hématoxyline selon l'une quelconque des revendications 1 à 11, dans laquelle la formulation d'hématoxyline est exempte d'un additif acide.

13. Procédé de coloration d'un échantillon biologique, comprenant : la mise en contact de l'échantillon biologique avec une formulation d'hématoxyline racémique, la formulation d'hématoxyline racémique comprenant un solvant, de l'hématoxyline, un mordant, un antioxydant, un stabilisant et une quantité d'un oxydant chimique suffisante pour convertir au moins une partie de l'hématoxyline racémique en hématéine.

14. Procédé selon la revendication 13, dans lequel le stabilisant est choisi dans le groupe constitué par un polysaccharide, un cryptand, un cryptophane, un cavitand, un éther couronne, un dendrimère, un nanotube, un calixarène, une valinomycine, un nigéricine, et des combinaisons de ceux-ci.

15. Utilisation d'une hématoxyline racémique pour colorer un échantillon biologique, dans laquelle la formulation d'hématoxyline comprend un solvant, de l'hématoxyline racémique, un oxydant chimique, un mordant, un stabilisant et un antioxydant ; et/ou dans laquelle la formulation d'hématoxyline est la formulation d'hématoxyline selon l'une quelconque des revendications 1 à 12.
